Europäisches Patentamt

European Patent Office

Office européen des brevets

(19)

(11) Veröffentlichungsnummer: **0 101 888**
**B1**

(12) # EUROPÄISCHE PATENTSCHRIFT

(45) Veröffentlichungstag der Patentschrift:
**17.02.88**

(21) Anmeldenummer: **83107121.2**

(22) Anmeldetag: **20.07.83**

(51) Int. Cl.⁴: **C 11 B 3/12,** B 01 D 1/22,
B 01 D 3/28

(54) **Verfahren zum Desodorieren und/oder Entsäuern von Cacaobutter und Cacaobutter-Ersatzstoffen.**

(30) Priorität: **23.07.82 DE 3227669**
**27.06.83 DE 3323120**

(43) Veröffentlichungstag der Anmeldung:
**07.03.84 Patentblatt 84/10**

(45) Bekanntmachung des Hinweises auf die Patenterteilung:
**17.02.88 Patentblatt 88/7**

(84) Benannte Vertragsstaaten:
**BE DE FR GB IT NL SE**

(56) Entgegenhaltungen:
**DE - A - 2 352 859**
**GB - A - 2 046 606**

(73) Patentinhaber: **Stage, Hermann, Dr., Ludgeristrasse 9,**
**D-4400 Münster (DE)**

(72) Erfinder: **Stage, Hermann, Dr., Ludgeristrasse 9,**
**D-4400 Münster (DE)**

(74) Vertreter: **Brehm, Hans-Peter, Dr. Dipl.-Chem. et al,**
**Patentanwälte Tischer, Kern & Brehm**
**Albert-Rosshaupter-Strasse 65,**
**D-8000 München 70 (DE)**

## Beschreibung

Die Erfindung betrifft das Desodorieren und/oder Entsäuern von Cacaobutter und Cacaobutter-Ersatzstoffen.

Im einzelnen betrifft die Erfindung ein Verfahren zum Desodorieren und/oder Entsäuern von hochsiedenden Flüssigkeiten nach dem Prinzip der kontinuerlichen Gegenstrom-Fallfilm-Treibdampfdestillation in einem von aussen aufgezwungenen Temperaturfeld, wobei die erwärmte Flüssigkeit als Dünnschicht einer Schichtdicke kleiner 1 mm an der Wand vertikal angeordneter, Rieselkanäle bildender Flächen herabfliesst, von denen wenigstens ein Teil auf einer höheren Temperatur als die herabfliessende Flüssigkeit gehalten wird, und ausschliesslich im Sumpf der Schlusszone Wasserdampf zugeführt und im Gegenstrom durch diese Rieselkanäle geführt wird.

Ein Verfahren dieser Art und eine zur Durchführung dieses Verfahrens geeignete Anlage ist aus der deutschen Offenlegungsschrift 2 914 101 bekannt. Das vorbekannte, einstufige, in einer einzigen Gegenstrom-Fallfilm-Treibdampfdestillations-Zone arbeitende Verfahren zum Desodorieren und/oder Entsäuern von hochsiedenden Verbindungen, insbesondere von Speiseölen, ist zur Reinigung von Cacaobutter nicht geeignet, weil nach dem einzigen Ausführungsbeispiel das Rohöl mit einer Temperatur von 250 °C auf den Verteilerboden im Kolonnenkopf aufgegeben wird.

Die aus der Cacaobohne gewonnene Cacaobutter weist ein an die menschliche Körpertemperatur hervorragend angepasstes Kristallisations- und Schmelzverhalten auf, was ursächlich auf eine ganz spezielle Triglyceridstruktur der dieses Fett aufbauenden Fettsäurereste zurückgeht, sofern die Cacaobutter im Laufe ihrer Aufarbeitung nicht thermisch und/oder oxydativ überbeansprucht worden ist.

Cacaobutter wird in grossem Umfang zur Herstellung von Schokolade, als Salbengrundlage und zur Herstellung von Suppositorien benötigt. Der aus der Cacaobutter zur Verfügung stehende Rohstoff ist knapp und teuer. Durch kombinierte spezielle Umesterungs- und Kristallisationsverfahren ist es gelungen, auch aus anderen Rohölen und Fetten, wie zum Beispiel aus Sal- oder Palmöl oder aus Talg, Cacaobutter-Ersatzstoffe bereitzustellen, die ein vergleichbares Kristallisations- und Schmelzverhalten wie die aus der Cacaobohne gewonnene Cacaobutter aufweist. Im Rahmen dieser Unterlagen werden unter «Cacaobutter-Ersatzstoffe» solche Fette verstanden, die im Bereich zwischen 30 und 42 °C schmelzen; in erster Linie ist hier an essbare Fette gedacht, insbesondere an zur Herstellung von Schokolade geeignete Fette. Auch wenn nachstehend nur kurz von «Cacaobutter» die Rede ist, sollen mit dieser Bezeichnung neben der eigentlichen, aus der Cacaobohne gewonnenen Cacaobutter auch diese weiteren Fette eingeschlossen sein, wie sie vorstehend als «Cacaobutter-Ersatzstoffe» definiert sind.

Alle als Cacaobutter geeigneten Rohfette haben meist einen mehr oder weniger grossen Gehalt an freien Fettsäuren und anderen leichtflüchtigen, den Geruch und Geschmack ungünstig beeinflussenden Komponenten, der vor der Verwendung als Schokoladenfett durch spezielle Raffinationsverfahren entfernt werden muss. Bei den bisher üblichen chemischen Raffinationsverfahren bedingt diese Entfernung einerseits unverhältnismässig grosse Fettverluste durch die Überführung der freien Säuren mittels Alkalien, in die einfach abzutrennenden Alkaliseifen, und andererseits so hohe Abwasserbelastungen, wie sie nach den heutigen gesetzlichen Regelungen nicht mehr zulässig sind. Grundsätzlich wäre auch bei Cacaobutter die rein destillative Entfernung der genannten Begleitstoffe ohne ihre vorherige chemische Umwandlung unter den bei anderen Speiseölen und Fetten gebräuchlichen Bedingungen der physikalischen Raffination nach dem Verfahren der Trägerdampfdestillation bei Drucken zwischen 2,6 und 13 mbar im Temperaturbereich zwischen 220 und 270 °C möglich, was aber unter diesen Bedingungen eine merkliche Änderung der Glyceridstruktur hervorrufen und wegen der bereits erwähnten Änderung des Kristallisations- und Schmelzverhaltens die Qualität des Produktes beeinträchtigen würde. Es besteht deshalb weiterhin Bedarf nach einem schonenden Verfahren zur physikalischen bzw. destillativen Desodorierung und/oder Entsäuerung von Cacabutter und Cacaobutter-Ersatzstoffen, welches Verfahren die Glyceridstruktur der Ausgangsmaterialien nicht nennenswert verändert.

Davon ausgehend besteht die Aufgabe der vorliegenden Erfindung darin, dass aus der DE-A-2 914 101 bekannte Verfahren weiterzubilden und an die Desodorierung und/oder Entsäuerung von Cacaobutter und Cacaobutter-Ersatzstoffen anzupassen.

Die erfindungsgemässe Lösung dieser Aufgabe ist ein Verfahren mit den in Anspruch 1 angegebenen Massnahmen. Vorteilhafte Ausgestaltungen und Weiterbildungen der Erfindung ergeben sich aus den Unteransprüchen.

Im einzelnen besteht die erfindungsgemässe Weiterbildung des eingangs genannten Verfahrens darin, dass zum Desodorieren und/oder Entsäuern von Cacaobutter und Cacaobutter-Ersatzstoffen die nachstehenden Bedingungen eingehalten werden:

(a) es werden wenigstens zwei hintereinander arbeitende und untereinander in Dampf- und Flüssigkeitsleitung stehende Gegenstrom-Fallfilm-Treibdampfdestillations-Zonen eingesetzt, von denen die in Richtung der herabfliessenden Flüssigkeit stromabwärts gelegene Schlusszone kleinere hydraulische Rieselkanal-Durchmesser oder deren Äquivalent bei nicht-rohrförmigen Rieselkanälen aufweist als die stromaufwärts gelegene Anfangszone;

(b) die Flüssigkeit wird – gegebenenfalls nach vorheriger Entgasung, Entwässerung und Entschleimung – mit einer Temperatur zwischen 150 und 200 °C auf den Kopf der Anfangszone gegeben;

(c) im Sumpf der Schlusszone liegt die Temperatur des entsäuerten und/oder desodorierten Produktes max. 10 °K über der Zulauftemperatur in der Anfangszone, wozu die Eintrittstemperaturen des im Gegenstrom bzw. im Kreuz/Gegenstrom zum herabfliessenden Flüssigkeitsfilm geführten Heizmittels die Filmablauftemperatur in keinem Falle um mehr als 10 °K übersteigt, und unter 205 °C gehalten wird;

(d) der Arbeitsdruck wird im Kopf der Anfangszone unter 2,0 mbar und im Sumpf der Schlusszone max. 1,6 mbar über demjenigen der Anfangszone gehalten;

(e) in den Flüssigkeitssammlern der hintereinander arbeitenden Zonen wird die Bildung eines nenneswerten Flüssigkeitsstandes vermieden; und

(f) der Trägerdampf wird in einer Menge von 2 bis 10 kg Dampf pro 100 kg aufgegebener Flüssigkeit zugeführt.

Die zwei- oder mehrstufige Aufarbeitung beruht auf der überraschenden Beobachtung, dass die Entsäuerung und/oder Desodorierung von Cacaobutter nach dem Prinzip der kontinuierlichen Gegenstrom-Fallfilm-Treibdampfdestillation in einem von aussen aufgezwungenen Temperaturfeld nicht linear erfolgt. Zumeist weist die zu entsäuernde Cacaobutter einen Anteil an freien Fettsäuren und anderen Leichtsiedern in der Grössenordnung von etwa 5 Gew.-% auf. Zur Verringerung des Anteils der zu entfernenden, gegenüber der Cacaobutter wesentlich leichter flüchtigen Komponenten bis auf etwa 10% ihres Ursprungsgehaltes sind maximal nur zwei theoretische Trennstufen erforderlich, die sich unter den genannten Arbeitsbedingungen bereits mit 2 bis 6 m Austauschlänge in Strömungskanälen mit einem hydraulischen Durchmesser von 120 bis 150 mm Durchmesser erreichen lassen. Vorzugsweise kommt man in dieser Anfangszone bereits mit einer Austauschlänge von etwa 3 bis 5 mm aus.

Zur Abtrennung der verbleibenden restlichen Verunreinigungen bis auf einen Restsäuregehalt kleiner 0,1 Gew.-%, vorzugsweise kleiner 0,05 Gew.-%, werden in der nachgeschalteten Schlusszone sechs bis acht theoretische Trennstufen benötigt, die sich unter den genannten Bedingungen sehr gut mit Strömungskanälen eines hydraulischen Durchmessers kleiner 120 mm und vorzugsweise kleiner 80 mm bei einer Austauschlänge von 4 bis 10 m, vorzugsweise bis etwa 8 m verwirklichen lassen. Vorzugsweise ist die Schlusszone in zwei Teilzonen unterteilt, von denen die an die Anfangszone anschliessende erste Teilzone der Schlusszone Rieselkanal-Durchmesser von 80 bis 120 mm und die zweite Teilzone Rieselkanal-Durchmesser kleiner 80 mm bis vorzugsweise etwa 50 mm aufweist. Die Neuverteilung des Öles auf die Rieselkanäle der Schlusszone, insbesondere auf die Rieselkanäle der Teilzonen der Schlusszone, erhöht die Wirksamkeit der dort stattfindenden Restentsäuerung noch weiter.

Obwohl sich eine notwendigerweise zweistufige, gegebenenfalls sogar dreistufige Behandlungsweise auf den ersten Blick nicht zur Desodorierung und/oder Entsäuerung empfindlicher Substanzen wie Cacaobutter anbietet, ist im Rahmen der vorliegenden Erfindung erkannt worden, dass unter ganz bestimmten Arbeitsbedingungen des Druckes, der Temperatur und der Verweilzeit jenes ältere Verfahren nach dem Prinzip der kontinuierlichen Gegenstrom-Fallfilm-Treibdampfdestillation in einem von aussen aufgezwungenen Temperaturfeld und in wenigstens zwei hintereinander arbeitenden und untereinander in Dampf- und Flüssigkeitsteilung stehenden Gegenstrom-Fallfilm-Treibdampfdestillations-Zonen auch zur schonenden Desodorierung und/oder Entsäuerung von Cacaobutter und Cacaobutter-Ersatzstoffen geeignet ist und überraschenderweise keine Änderung der Glyceridstruktur des Ausgangsmaterials hervorruft. Zu diesen bestimmten Arbeitsbedingungen gehören insbesondere die Temperatur des Rohfettes bei Aufgabe auf den Verteiler im Kopf der Anfangszone, sowie die Temperatur bei der Entnahme des Produktes aus dem Sumpf der Schlusszone, der Arbeitsdruck im Kopf der Anfangszone und im Sumpf der Schlusszone, die Verweilzeit und die Reynold'sche Zahl des Flüssigkeitsfilmes, wie das nachstehend im einzelnen ausgeführt ist.

Das erfindungsgemässe Verfahren ist insbesondere zur Entsäuerung von Cacaobutter und Cacaobutter-Ersatzstoffen geeignet. Gleichzeitig mit der Entsäuerung findet dann auch die Desodorierung statt. Andererseits kann das erfindungsgemässe Verfahren auch ausschliesslich zur Desodorierung eingesetzt werden, etwa wenn schon auf anderem Wege, etwa chemisch, eine Entsäuerung durchgeführt worden ist. Sofern lediglich eine Desodorierung beabsichtigt ist, erlaubt eine gegebene Anlage bei im wesentlichen festgehaltenen Verfahrensparametern einen grösseren Durchsatz. Das erfindungsgemässe Verfahren wird nachstehend insbesondere mit Bezugnahme auf die Entsäuerung (automatisch verbunden mit einer Desodorierung) erläutert. Die gezielten Abwandlungen zur alleinigen Desodorierung können von Fachleuten leicht vorgenommen werden und zielen insbesondere auf einen höheren Durchsatz, geringfügig höhere Schichtdicke des Flüssigkeitsfilms und gegebenenfalls höhere Reynold'sche Zahlen der Flüssigkeit.

Die zu behandelnde Cacaobutter wird in einem ersten vorgeschalteten Wärmetauscher – der vorzugsweise die Wärme des im Gegenstrom geführten, heissen Fertigöls ausnutzt – auf eine Temperatur von etwa 140 bis 180 °C erwärmt und daraufhin im Hochtemperatur-Wärmetauscher auf die Arbeitstemperatur von 150 bis 200 °C gebracht und mit dieser Temperatur in die Anfangszone eingeführt. Vorzugsweise wird das Rohfett mit einer Temperatur von 160 bis 190 °C, besonders bevorzugt mit einer Temperatur zwischen 180 und 190 °C auf den Verteiler in der Anfangszone aufgegeben.

Im Laufe des gesamten Verfahrens soll die Temperatur einzelner Teilchen des Flüssigkeitsfilms 200 °C nicht überschreiten. Entsprechend vorsichtig ist die Temperatur des im Gegenstrom oder Kreuz/Gegenstrom geführten Heizmittels zu steuern. Die Temperatur des Heizmittels, beispielsweise HT-Öl, darf maximal 10 °K über der Filmablauftemperatur liegen und soll vorzugsweise weniger als 5 °K über dieser Filmablauftemperatur liegen. In jedem Falle darf die Eintrittstemperatur des Heizmittels 205 °C und vorzugsweise 195 °C nicht übersteigen.

Im wesentlichen muss das Heizmittel die Wärmeverluste des Flüssigkeitsfilms wegen Verdampfung von Fettsäuren und anderen Leichtsiedern ausgleichen und zur ständigen Erneuerung der Flüssigkeitsfilm-Oberfläche beitragen. In der Anfangszone kann – weil hier die Hauptaustreibsarbeit geleistet wird – die Temperatur der Wände der Rieselkanäle um maximal 10 °K, vorzugsweise um etwa 2 bis 4 °K über der Filmablauftemperatur gehalten werden. In der Schlusszone soll die Rieselkanalwand-Temperatur im wesentlichen der Filmablauftemperatur entsprechen.

Im Sumpf der Schlusszone liegt die Temperatur des entsäuerten und/oder desodorierten Produktes maximal 10 °K und vorzugsweise höchstens 5 °K über der Zulauftemperatur in der Anfangszone.

Wegen der vergleichsweise niedrigen Arbeitstemperaturen von 150 bis 200 °C für einen so hoch siedenden Stoff wie Cacaobutter sind zur wirksamen Entsäuerung ein besonders niedriger Arbeitsdruck und eine vergleichsweise grosse Menge Trägerdampf erforderlich. Der Arbeitsdruck im Kopf der Anfangszone wird unter 2,0 mbar und vorzugsweise unter 1,8 mbar gehalten, und liegt im Sumpf der Schlusszone maximal 1,6 mbar und vorzugsweise weniger als 1,2 mbar über diesem Arbeitsdruck in der Anfangszone. Das erfindungsgemässe Verfahren arbeitet somit nicht nur bei einem sehr niedrigen Arbeitsdruck, sondern auch mit einem äusserst geringen Druckverlust. Zur Reduzierung des Druckverlustes tragen bei die Verwendung von Rieselkanälen mit vergleichsweise grossem Rieselkanaldurchmesser, die Vermeidung nennenswerter Flüssigkeitsstände in den Flüssigkeitssammlern der Behandlungszonen, und – soweit erforderlich – eine Vorreinigung des zu entsäuernden Rohfettes, die bei besonders hohen Anteilen an freien Fettsäuren und anderen Leichtsiedern durch eine Flashbehandlung ergänzt werden kann, wie das nachstehend noch im einzelnen ausgeführt wird.

Der Trägerdampf wird in einer Menge von 2 bis 10, vorzugsweise in einer Menge von 3 bis 8 kg Dampf pro 100 kg aufgegebener Flüssigkeit zugeführt. Vorzugsweise wird sogenannter Edeldampf verwendet, der aus vorher destilliertem und entgastem Wasser erzeugt worden ist. Der Trägerdampf wird ausschliesslich in den Sumpf der Schlusszone – bei einer einer zweizonigen Schlusszone in den Sumpf der zweiten (letzten) Teilzone – eingebracht. Vorzugsweise wird der Trägerdampf vor dem Einbringen in den Sumpf der Schlusszone auf die dort herrschende Temperatur gebracht, was die Einstellung des Arbeitsdruckes erleichtert.

Bei den niedrigen Behandlungstemperaturen unter 200 °C ist die Viskosität der Cacaobutter vergleichsweise hoch; im bevorzugten Temperaturbereich zwischen 160 und 190 °C beträgt deren Viskosität etwa 0,004 bis 0,00013 Pa · s, woraus eine Fallgeschwindigkeit des Flüssigkeitsfilms im Bereich von etwa 0,25 bis 0,6 m/sec resultiert. Zur Gewährleistung von wenigstens 8 bis 10 Trennstufen sind unter den gewählten Bedingungen Rieselkanal-Längen von wenigstens 6 m erforderlich, was zu Aufenthaltszeiten einzelner Flüssigkeitsteilchen in den Gegenstrom-Fallfilm-Treibdampfdestillations-Zonen von etwa 20 bis 30 sec führt. Andererseits ist im Rahmen dieser Erfindung erkannt worden, dass die Gesamtverweilzeit von Flüssigkeitsteilchen im Hochtemperaturbereich mit Temperaturen zwischen 150 und 200 °C etwa 40 sec nicht übersteigen soll, um eine Veränderung der speziellen Triglyceridstruktur zu vermeiden. Aus diesem Grund darf keinesfalls ein Verweilzeitbehälter vorgesehen werden, wie er nach dem Stand der Technik zum Bleichen des Produktes üblich ist, und eine auch nur temporäre Ansammlung nennenswerter Flüssigkeitsmengen in den Sümpfen der Behandlungszonen muss vermieden werden. Zu diesem Zweck sind die unteren Flüssigkeitssammler der Filmstufen derart angeordnet und ausgebildet, dass sich bei kontinuierlicher Flüssigkeitsbeaufschlagung der Fallfilmrohre einer Filmstufe der Flüssigkeitsstand der aus ihnen in den unteren Sammler ablaufenden Flüssigkeit erst in der an seinem tiefsten Punkt mit Gefälle nach unten angeschlossenen und sodann auch stets im Gefälle zum Flüssigkeitsverteiler der nachfolgenden Filmstufe bzw. zur Pumpenvorlage der letzten Stufe verlegten Rohrleitung einstellt, so dass der hier verbleibende Flüsskigkeitsinhalt letzten Endes nur durch die Flüssigkeitsbenetzung der vorhandenen Wände bedingt ist.

Der zulässige Druckverlust in der Schlusszone bestimmt dort die Gesamt-Umfangslänge der Rieselkanäle. In der weiter stromaufwärts gelegenen Anfangszone muss die Gesamt-Unfamgslänge der Rieselkanäle wenigstens gleich gross sein, wird jedoch vorzugsweise von Zone zu Zone grösser bemessen, so dass die zur Flüssigkeitsaufgabe benachbarte Zone die grösste Gesamt-Umfangslänge aufweist. Die Obergrenze der Gesamt-Umfangs-Länge in dieser Zone wird dahingehend gewählt, dass dort die Reynolds-Zahl der Flüssigkeit nicht unter 50, vorzugsweise nicht unter 100 liegt.

Erfindungsgemäss ergeben sich besonders günstige Strömungs- und Austauschverhältnisse für einerseits den Flüssigkeitsfilm und andererseits die Dämpfeströmung dann, wenn der Flüssigkeitsdurchsatz durch jede Zone praktisch gleich ist und im Falle der Entsäuerung pro Stunde 0,4 bis 1,6 m³ und vorzugsweise 0,7 bis 0,9 m³ Flüssigkeit pro m Gesamt-Umfangslänge der Rieselkanäle ausmacht. Für den Fall, dass nach dem erfindungsgemässen Verfahren lediglich eine Desodorierung durchgeführt werden soll – beispielsweise, weil die Flüssigkeit schon auf chemischem Wege entsäuert worden ist – können höhere Werte vorgesehen werden; in diesem Fall kann der Flüssigkeitsdurchsatz 0,8 bis 2,4 m³/m · h und vorzugsweise 1,4 bis 1,8 m³/m · h ausmachen.

Ausgehend von diesen Belastungswerten der Rieselkanalwände und unter Berücksichtigung obiger Ausführungen zur Gesamt-Umfangslänge wird die Schichtdicke des Flüssigkeitsfilmes vorzugsweise zwischen 0,35 und 0,5 mm gehalten. In der Schlusszone kann die Schichtdicke des Flüssigkeitsfilms geringfügig höher sein.

Die Reynold'sche Zahl des Flüssigkeitsfilms wird oberhalb 50, vorzugsweise im Bereich zwischen 100 und 180 gehalten. Nach einem weiteren Gesichtspunkt der Erfindung werden in der Anfangszone, in der Schlusszone und gegebenenfalls auch in den Teilzonen der Schlusszone solche Fliessbedingungen vorgesehen, dass der herabrieselnde Flüssigkeitsfilm von Zone zu Zone grössere Reynold'sche Zahlen aufweist. Diesen Reynolds-Zahlen der Flüssigkeit stehen Reynolds-Zahlen der Dämpfeströmung von wenigstens 700 gegenüber. Die Dämpfströmung kann Reynolds-Zahlen bis etwa 5000 annehmen. Im Gegensatz zu den Verhältnissen beim Flüssigkeitsfilm weisen die Dämpfe in einer nachfolgenden Behandlungszone kleinere Reynolds-Zahlen auf, als in der vorausgegangenen Zone.

Die zu entsäuernde Cacaobutter weist je nach Herkunft, Alter, Lagerbedingungen und dgl. einen grösseren oder kleineren Gehalt an freien Fettsäuren im Bereich von etwa 1 bis 5% auf. Daneben enthalten solche Rohfette etwa 0,05 bis 0,3 Gew.-% Wasser und 0,01 bis 0,1 Gew.-% andere leichter siedende, destillativ abtrennbare Komponenten. Bevor derartige Rohfette auf die Behandlungstemperatur aufgeheizt und dem erfindungsgemässen Verfahren zugeführt werden, erfolgt vorzugsweise in einer vorgeschalteten Behandlungsstufe eine Entschleimung und Entgasung, und teilweise Entwässerung.

Nach einem weiteren Gesichtspunkt der Erfindung erfolgt die Entgasung bei relativ niedrigen Temperaturen zwischen 40 und 100 °C, vorzugsweise zwischen 60 und 80 °C, sowie unter einem Arbeitsdruck von etwa 100 bis 280 mbar, vorzugsweise zwischen 120 und 200 mbar. Unter diesen Bedingungen wird das Rohfett ausreichend entgast, jedoch nicht restlos getrocknet. Vielmehr verbleibt im Rohöl ein Restanteil an gelöstem Wasser in der Grössenordnung von 0,05 bis 0,2 Gew.-%, der erst unter den Arbeitsbedingungen in der anschliessenden Anfangszone der Gegenstrom - Fallfilm - Trägerdampfdestillations - Zonen unter dem dort vorgesehenen Arbeitsdruck kleiner 1,0 mbar, bei einer Temperatur des Flüssigkeitsfilmes von 150 bis 200 °C, vorzugsweise von 160 bis 190 °C freigesetzt wird. Der unter diesen Bedingungen aus dem Flüssigkeitsfilm freigesetzte Wasserdampf wirkt zusätzlich als Trägerdampf. fördert die Oberflächenerneuerung des Flüssigkeitsfilms in der Anfangszone und erhöht dort auch die Reynolds-Zahl der Flüssigkeit. Sofern daher das Rohfett entgast, jedoch mit einem Wassergehalt von etwa 0,05 bis 0,2 Gew.-% in die Anfangszone eingeführt wird, verbessert dies dort den Stoffaustausch gegenüber einem herabfliessenden Film aus wasserfreier Flüssigkeit merklich. Die in der Entgasungsstufe freigesetzten Dämpfe werden vorzugsweise ebenfalls am ersten Teil des Vakuumaggregates mit den entsprechenden Kompressionsstufen vorbei, einem Einspritz-Kondensator entsprechenden Druckes zugeführt und dort mittels üblichem Kühlwasser niedergeschlagen, um eine zusätzliche Belastung des Kompressions-Teiles zu vermeiden.

Unter bestimmten Voraussetzungen, etwa bei der Aufarbeitung schlecht gelagerter Cacaobutter oder bei der Aufarbeitung von bestimmten Cacaobutter-Ersatzstoffen, kann deren Gehalt an freien Fettsäuren und anderen Leichtsiedern so hohe Werte annehmen, beispielsweise bis etwa 10 Gew.-% und mehr, dass die Gemische bei den vorgesehenen Arbeitsbedingungen – Temperatur bis 200 °C, Arbeitsdruck unter 2,0 mbar – bereits ohne Zugabe von Träger- bzw. Strippdampf sieden.

Nach einem weiteren Gesichtspunkt der Erfindung wird von dieser Beobachtung Gebrauch gemacht und vor der Einführung des Rohfettes in die Anfangszone eine Flashbehandlung durchgeführt. Hierzu kann ein Flashbehälter vorgesehen werden, in den das auf Arbeitstemperatur gebrachte Rohfett eingeführt wird. Im Flashbehälter herrscht praktisch der gleiche Arbeitsdruck wie in der Anfangszone (unter 2,0 mbar), wozu der Flashbehälter zweckmässigerweise über Kopf an den, das Vakuum erzeugende Aggregat vorgeschalteten Einspritzkondensator angeschlossen ist. Vorteilhafterweise ist der Flashbehälter oberhalb des Verteilers im Kopf der Anfangszone angeordnet, so dass das geflashte Rohfett – ohne Benutzung einer Pumpe – lediglich unter der Wirkung seines Gewichtes aus dem Sumpf des Flashbehälters auf diesen Verteiler gelangt. Mittels einer solchen – ohne die Zuführung von Strippdampf erfolgenden – Flashung kann der Anteil an freier Fettsäure und anderen Leichtsiedern im Rohfett auf etwa 2 bis 4 Gew.-% abgesenkt werden. Ersichtlich führt eine solche Flashung zur Verringerung des Stripp- bzw. Trägerdampfbedarfs und damit auch zu einer Energieeinsparung im Vakuum erzeugenden Aggregat.

Eine solche Flashung kann zusätzlich zur vorausgegangenen Entschleimung, Entgasung und teilweisen Entwässerung vorgesehen werden.

Die Qualität des Fertigöles kann durch eine an sich bekannte Zugabe von Komplexbildnern in den Sumpf der Schlusszone oder in das abgezogene und bereits weiter abgekühlte Produkt weiter verbessert werden. Derartige Komplexbildner dienen vor allem dazu, in geringer Menge stets vorhandene und oxidationsfördernd wirkende Metallionen zu komplexieren. Zu diesem Zweck hat sich beispielsweise die Zugabe von Zitronensäure in einer Menge von 5 g/Tonne Produkt in den Sumpf der Schlusszone gut bewährt. Zu anderen, geeigneten Komplexbildnern gehören Weinsäure.

Phosphorsäure, Ascorbinsäure, Milchsäure und dgl.. Soweit derartige Komplexbildner bei der Sumpftemperatur bereits geschädigt werden, erfolgt deren Zugabe zweckmässigerweise nach Kühlung des Produktes auf Temperaturen unter ca. 100 °C im Wärmetausch gegen die frisch herangeführte, rohe und zu entsäuernde Cacaobutter.

Nach einem wesentlichen Gesichtspunkt erfolgt die Treibdampfzugabe lediglich im Sumpf der Schlusszone – bei einer zweizonigen Schlusszone ausschliesslich im Sumpf der zweiten (letzten) Teilzone –. Damit herrschen dort zum Austreiben des noch vorhandenen restlichen Gehaltes an freien Fettsäuren optimale Bedingungen. Ferner können dadurch im Sumpf dieser Schlusszone die zum Stoffaustausch erforderlichen Temperaturen auf dem niedrigst-möglichen Wert gehalten werden. Schliesslich gewährleistet diese Massnahme über sämtliche Zonen ein echtes Gegenstromprinzip mit höchstmöglicher Anreicherung der Fettsäuren im Dampf, so dass der am Kolonnenkopf austretende Dampf, bezogen auf wasserfreie Substanzen, zu mehr als 95% aus freien Fettsäuren und zu weniger als 3% aus den Triglyceriden der behandelten Cacaobutter besteht.

Nachstehend wird die Anlage zur Durchführung des erfindungsgemässen Verfahrens anhand bevorzugter Ausführungsformen mit Bezugnahme auf die Zeichnungen erläutert; die letzteren zeigen:

Fig. 1 ein Fliessschema mit zwei Gegenstrom-Fallfilm-Treibdampfdestillations-Zonen zur Durchführung des erfindungsgemässen Verfahrens;

Fig. 1a ein Fliessschema analog zu Fig. 1, jedoch mit zusätzlich eingefügtem Flashbehälter;

Fig. 2 ein Fliessschema mit drei Gegenstrom-Fallfilm-Treibdampfdestillations-Zonen zur Durchführung des erfindungsgemässen Verfahrens;

Fig. 3 eine mit Kerzen ausgerüstete Fallfilmkolonne, innerhalb der die Anfangszone des erfindungsgemässen Verfahrens durchgeführt werden kann;

Fig. 4 die Fallfilmkolonne nach Fig. 3 in einer Querschnittsdarstellung;

Fig. 5 eine echte Rieselkolonne geringen Druckverlustes, innerhalb der die Schlusszone des erfindungsgemässen Verfahrens durchgeführt werden kann; und

Fig. 6 schematisch einen Kolonnenschuss, in den drei verschiedene Fallfilmkolonnen zur Realisierung der Anfangszone und der ersten und zweiten Teilzone der Schlusszone integriert sind.

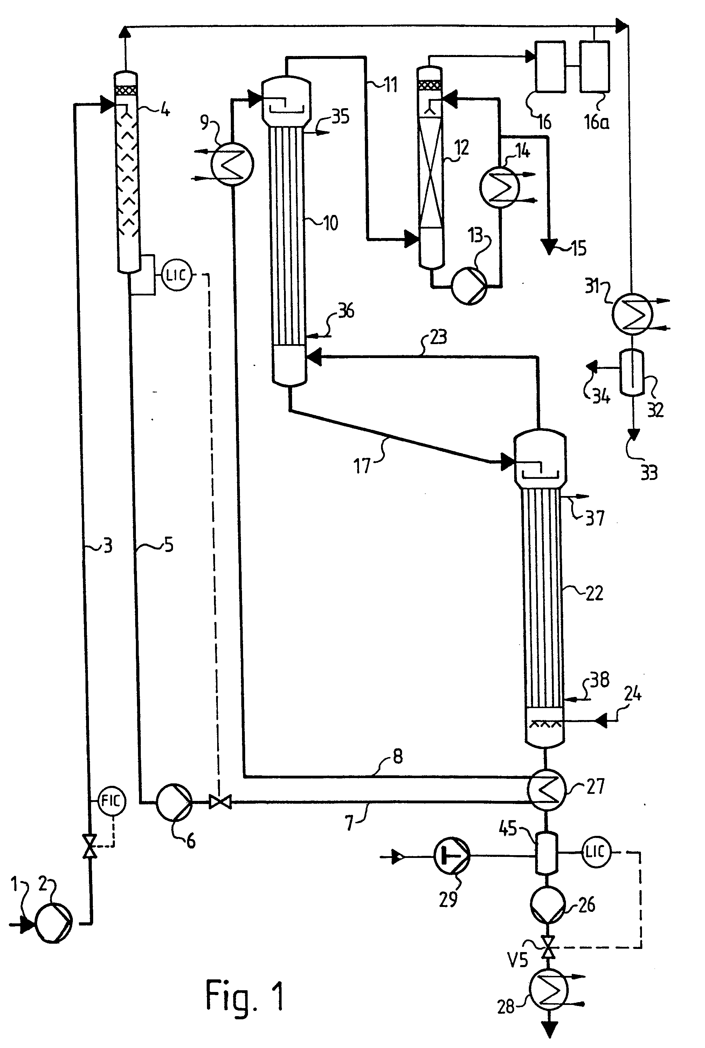

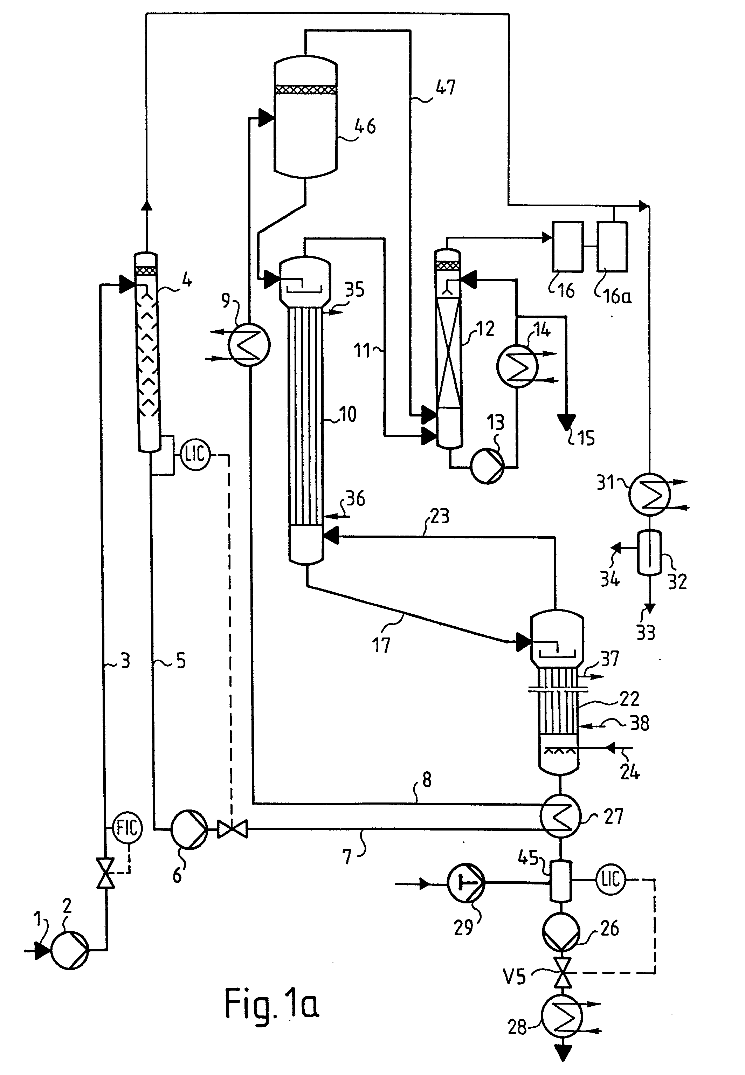

Wie aus Fig. 1 ersichtlich, besteht die Gesamtanlage zur Desodorierung und/oder Entsäuerung in den Hauptteilen – neben den hier nicht im einzelnen erwähnten, üblichen Bestandteilen solcher Anlagen wie Rohrleitungen, Pumpen, Armaturen, Reglern, und dgl. – hauptsächlich aus der Entgasungsstufe 4, den Wärmetauschern 27 und 28, einer ersten Fallfilmkolonne 10, dem Einspritzkondensator 12 mit Kühler 14 in der Zirkulationsleitung zum Vakuum erzeugenden Aggregat 16, 16a, der letzten Fallfilmkolonne 22, deren Kopf über die Rohrleitung 17 in Flüssigkeitsleitung und über die Rohrleitung 23 in Dampfleitung mit dem Sumpf der Fallfilmkolonne 10 steht, und der Trägerdampfzuführung 24.

Im einzelnden wird – wie aus Fig. 1 ersichtlich – das Rohfett aus einem Lagertank 1 mit einer Temperatur von 60 °C entnommen, und mittels der Pumpe 2 über die Leitung 3 dem Kopf der Entgasungsstufe 4 zugeführt. Die Entgasungsstufe 4 wird beispielsweise bei einem Arbeitsdruck von 200 mbar betrieben. Mittels des Flüssigkeitsstandreglers im Sumpf der Entgasungsstufe 4 wird gewährleistet, dass auf der Saugseite der über die Leitung 5 nachgeschalteten Förderpumpe 6 stets eine entsprechend hohe Flüssigkeitssäule steht, mit der in der Pumpe 6 stets ein geringer Überdruck gewährleistet werden kann. Damit kann – auch bei Verwendung der kostengünstigeren mit Stopfbüchsen ausgestatteten Pumpen für die Förderpumpe 6 – verhindert werden, dass erneut Luftsauerstoff in die bereits entgaste Flüssigkeit eintritt.

Von der Förderpumpe 6 wird das flüssige Fett über die Leitung 7 einem Wärmetauscher 27 zugeführt. Im Wärmetauscher 27 erfolgt die Aufheizung des entgasten, aber noch wasserhaltigen Fettes im Wärmetausch mit dem aus dem Sumpf der letzten Fallfilmkolonne 22 abgezogenen Produktes. Das im Wärmetauscher 27 vorgewärmte Fett wird über die Leitung 8 dem Hochtemperatur-Wärmetauscher 9 zugeführt, wo im Austausch gegen ein Hochtemperatur-Heizmedium die Aufheizung auf die Arbeitstemperatur erfolgt.

Wie aus Fig. 1a ersichtlich, kann zwischen Hochtemperaturwärmetauscher 9 und Fallfilmkolonne 10 ein Flashbehälter 46 eingeschaltet sein, der über Kopf über die Leitung 47 an den Sumpf des Einspritzkondensators 12 angeschlossen ist. Bei Bedarf kann – ohne dass dies in der Zeichnung angedeutet ist – der Flashbehälter 46 mit dem, dem Hochtemperatur-Wärmetauscher 9 zugeführten Heizmittel beheizt werden. Aus dem Sumpf des Flashbehälters 46 gelangt das geflashte Rohfett auf den Verteiler im Kopf der Fallfilmkolonne 10.

Das im Hochtemperatur-Wärmetauscher 9 auf die Arbeitstemperatur gebrachte Rohfett wird direkt – oder über den dazwischengeschalteten Flashbehälter 46 – auf den im Kopf der ersten Fallfilmkolonne 10 angeordneten Verteiler gegeben. Bei diesem, sowie den weiteren Verteilern sind – nicht dargestellte – Dampfdurchtrittsröhrchen zweckmässiger Abmessungen vorgesehen, um die Dämpfe möglichst druckverlustarm (beispielsweise weniger als 0,008 mbar) von Zone zu Zone zu leiten. Innerhalb dieser Fallfilmkolonne 10 wird die Anfangszone der Gegenstrom-Fallfilm-Trägerdampfdestillations-Zonen realisiert. Nach einem wesentlichen Gesichtspunkt der vorliegenden Erfindung soll diese Anfangszone etwa zwei theoretische Trennstufen gewährleisten, was sich unter den angegebenen Bedingungen gut mit einer Fallfilmkolonne 10 realisieren lässt, deren Rieselkanäle einen hydraulischen Durchmesser von 120 bis 150 mm oder dessen Äquivalent bei nicht-rohrförmigen Rieselkanälen und eine Länge von 2 bis 6 m, vorzugsweise eine Länge von etwa 3 bis 4 m aufweisen. Gut geeignet sind beispielsweise indirekt beheizte Rohrbündelkolonnen, bei denen der Flüssigkeitsfilm an der Innenwand der Rohre herabrieselt. Bei der anhand der Fig. 1 beschriebenen Ausführungsform befindet sich innerhalb der Fallfilmkolonne 10 ein Rohrbündel mit 8 Rohren (Innendurchmesser 133 mm, Länge 3 m), an deren Innenwänden der Flüssigkeitsfilm herabfliesst. In diesem Falle entspricht der Innendurchmesser direkt dem hydraulischen Durchmesser des Rieselkanals. Bekanntlich ist der «hydraulische Durchmesser» $r_h$ eines Rieselkanals nach Prandtl definiert als

$$r_h = \frac{F}{U}$$

wobei F für die Querschnittsfläche und U für den benetzten Querschnittsumfang stehen (vgl. «Führer durch die Strömungslehre» von Ludwig Prandtl, erschienen im Verlag Friedrich Vieweg & Sohn, Braunschweig, 1942, S. 145).

Für nicht-rohrförmige Rieselkanäle lässt sich das Äquivalent des hydraulischen Rieselkanaldurchmessers nach bekannten Gleichungen arbeiten, wie sie beispielsweise von Bruno Eck in «Technische Strömungslehre», erschienen im Springer Verlag, Berlin, 1949, S. 109, angegeben sind. Danach kann der hydraulische Durchmesser eines Strömungs- oder Rieselkanals unrunden Querschnitts aus dem Querschnittsflächen-Äquivalent im Sinne von

$$d = \frac{4 \cdot F}{U}$$

ermittelt werden. Hierbei bedeuten

d = hydraulischer Durchmesser des unrunden Rieselkanals;
F = Querschnittsfläche des unrunden Rieselkanals;
U = Umfang des unrunden Riselkanals.

Innerhalb der Fallfilmkolonne 10 wird jedes einzelne Rohr des Rohrbündels von Heizmedium umspült, das aus vorgegebener Quelle über den Stutzen 36 zu und über den Stutzen 35 abgeführt wird. Im vorgesehenen Temperaturbereich kann Hochdruckdampf oder ein Hochdrucktemperaturöl wie beispielsweise «HT-Öl» (höhere aromatische Verbindungen) als Heizmedium dienen, wobei die Anwendung des Hochtemperaturöls ein Temperaturgefälle auf der Heizmittelseite erzeugt und deshalb bevorzugt wird.

Das sich im Kopf der Fallfilmkolonne 10 ansammelnde Gemisch aus verunreinigtem Trägerdampf, aus aus dem Rohfett abgetrennten freien Fettsäuren und aus anderen Leichtsiedern wird über die Leitung 11 abgezogen und in den Einspritzkondensator 12 eingeführt. Die Pumpe 13 saugt das sich im Sumpf des Einspritzkondensators 12 ansammelnde Kondensat ab und drückt es in eine Zirkulationsleitung, die über den Kühler 14 geführt wird. Danach wird das anfallende Kondensat kontinuierlich über die Leitung 15 abgezogen, während das Kühlmittel erneut in den oberen Teil des Einspritzkondensators 12 eingespritzt wird. Vom Kopf des Einspritzkondensators 12 führt schliesslich eine ausreichend bemessene Leitung zur Gewährleistung eines äusserst geringen Strömungsdruckverlustes zu der ersten Boosterstufe der Vakuumanlage 16, 16a.

Das an der Innenwand der Rohrbündel in der Fallfilmkolonne 10 herabfliessende Fett sammelt sich in deren Sumpf und wird über die Leitung 17 abgezogen. Wie dargestellt, ist die Leitung 17 längs ihres gesamten Weges abwärts geneigt geführt, um irgendwelche Flüssigkeitsansammlungen zu vermeiden.

Das aus dem Sumpf der Fallfilmkolonne 10 abgezogene, bereits weitgehend gereinigte Rohfett gelangt über die Leitung 17 in den Kopf der letzten Fallfilmkolonne 22 und wird über deren Verteiler auf die verschiedenen Rieselkanäle verteilt. Innerhalb der Fallfilmkolonne 22 ist die Schlusszone der Gegenstrom-Fallfilm-Treibdampfdestillations-Zonen realisiert. Aus dem Kopf der Fallfilmkolonne 22 führt eine Sammelleitung 23 in den Sumpf der Fallfilmkolonne 10, so dass zwischen beiden Fallfilmkolonnen 10 und 22 einerseits Flüssigkeitsleitung und andererseits Dampfleitung besteht. Nach einem wesentlichen Gesichtspunkt der Erfindung sind innerhalb dieser Fallfilmkolonne 22 Rieselkanäle mit einem hydraulischen Durchmesser kleiner 120 mm oder dessen Äquivalent bei nicht-rohrförmigen Riselkanälen und mit einer Länge von 6 bis 10 m ausgebildet. Vorzugsweise weisen diese Rieselkanäle einen hydraulischen Durchmesser von 50 bis 80 mm bei einer Rieselkanallänge um 8 m herum auf.

Bei der anhand der Fig. 1 beschriebenen Ausführungsform weist die Fallfilmkolonne 22 ein Rohrbündel mit 15 Rohren von 71 mm Innendurchmesser und 8 m Länge auf. Diese Rohre werden von einem Heizmedium umspült, das über den Stutzen 38 zu und über den Stutzen 37 abgeführt wird. Das Rohfett fliesst an der Innenwand der Rohre herunter, wobei gleichzeitig die Abtrennung der restlichen leichtsiedenden Begleitstoffe erfolgt und gelangt schliesslich in den Sumpf der Fallfilmkolonne 22. In diesen wird über die Leitung 24 der Treibdampf zugeführt, vorzugsweise sog. Edeldampf, der durch Verdampfung von vorher destilliertem und entgastem Wasser erzeugt worden ist.

Das Produkt wird schliesslich aus dem Sumpf der Fallfilmkolonne 22 abgezogen und nach Passieren der Pumpenzwischenvorlage 45 mittels der Pumpe 26 durch den Wärmetauscher 27 gefördert, wo es den wesentlichen Teil seiner fühlbaren Wärme an das zu behandelnde Rohfett abgibt. In das in der Pumpenzwischenvorlage 45 befindliche Produkt kann aus einem Vorrat mittels Pumpe 29 ein Stabilisator eingeführt werden. Um eine gute Lagerstabilität der Cacaobutter zu gewährleisten, erfolgt schliesslich eine weitere indirekte Abkühlung mittels Kühlwasser im Tauscher 28 bis auf die niedrigst mögliche Temperatur, bei der sich die Cacaobutter gerade noch pumpen lässt. Gegebenenfalls kann anschliessend eine Blankfiltration unter Inertgasatmosphäre vorgesehen werden.

Wie dem Schema nach Fig. 1 entnehmbar ist, wird die Entgasungsstufe 4 vorzugsweise unter solchen Bedingungen betrieben, dass sich die daraus abgezogenen Dämpfe im Kondensator 31 bzw. in einem, den entsprechenden Druck aufweisenden Einspritzkondensator der Vakuumanlage mittels üblichem Kühlwasser einer Temperatur unter 60°C niederschlagen und hinsichtlich der kondensierbaren Phasen kondensieren lassen. Die Entnahme des dabei gebildeten Kondensats nach der Scheidung im Phasenscheider 32 erfolgt zum einen als wässrige Phase über die Leitung 33, die zusammen mit dem Kondensat der Vakuumanlage zur Erfüllung der heutigen Umweltauflagen in an sich bekannter Weise aufgearbeitet wird. Die sich im Scheider 32 als obere Phase absetzende, leichtere organische Phase wird über die Leitung 34 abgezogen, was wegen des geringen Mengenanfalls am besten nicht kontinuierlich, sondern periodisch vorgenommen wird.

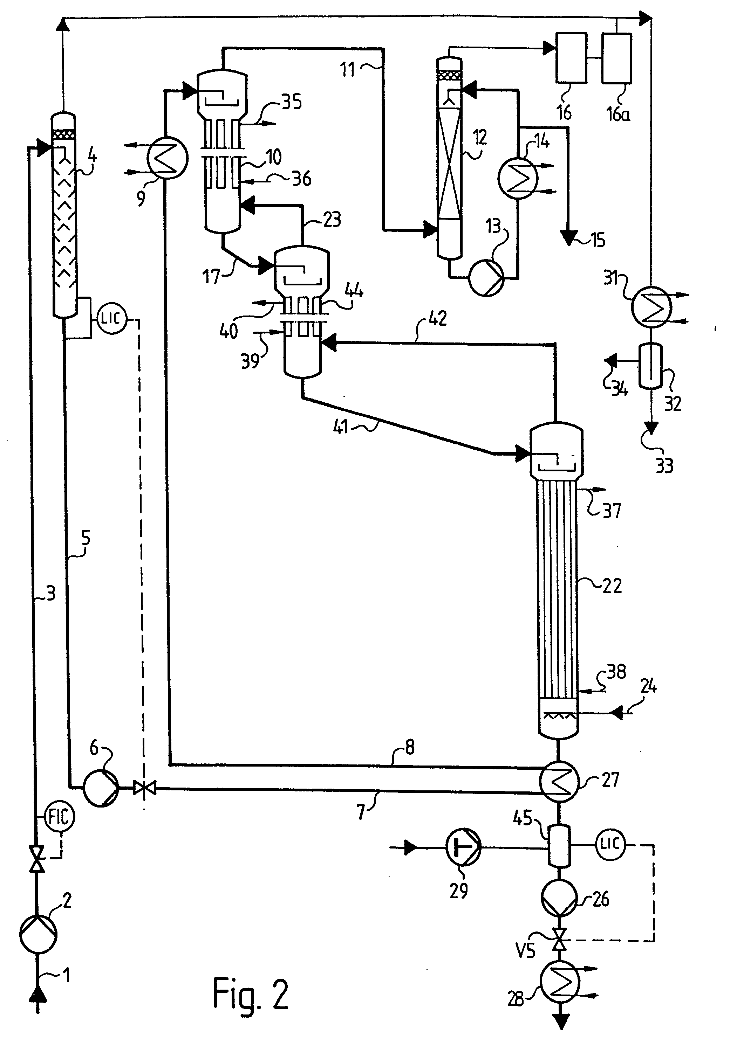

Nach weiteren Ausführungsformen der Erfindung kann die oben anhand der Fig. 1 erläuterte Anlage in verschiedenen Teilbereichen abgewandelt werden. So ist es möglich – wie anhand der Schemazeichnung nach Fig. 2 dargestellt – die Schlusszone zweizonig auszubilden, und die dabei resultierenden Teilzonen in zwei verschiedenen Fallfilmkolonnen zu realisieren, nämlich die erste Teilzone der Schlusszone in der Fallfilmkolonne 44 und die zweite Teilzone in der Fallfilmkolonne 22. Die Fallfilmkolonne 22 kann von der oben in Verbindung mit Fig. 1 erläuterten Bauart sein.

Wie in Fig. 2 dargestellt, führt in diesem Falle die stets geneigt verlaufende Flüssigkeitsleitung 17 vom Sumpf der Fallfilmkolonne 10 auf den Verteiler der Fallfilmkolonne 44, und aus deren Sumpf führt die stets geneigt verlaufende Flüssigkeitsleitung 41 auf den Verteiler der Fallfilmkolonne 22. Aus deren Kopf führt die Dampfsammelleitung 42 in den Sumpf der Fallfilmkolonne 44, und aus deren Kopf führt die Dampfsammelleitung 23 in den Sumpf der Fallfilmkolonne 10.

Die Fallfilmkolonne 44 gewährleistet wenigstens zwei theoretische Trennstufen. Innerhalb der Fallfilmkolonne 44 sind Rieselkanäle mit einem hydraulischen Durchmesser von 120 bis 80 mm und einer Länge von 2 bis 3 m ausgebildet. Bei einer beispielhaften Ausführungsform weisen die Rieselkanäle der Fallfilmkolonne 44 hydraulische Durchmesser von ca. 84 mm bei einer Länge von ca. 3 m auf. Diese Rieselkanäle können beispielsweise innerhalb der Rohre einer Rohrbündelkolonne ausgebildet sein. Die Rieselkanäle werden indirekt mittels eines Heizmediums beheizt, das über den Stutzen 39 zu und über den Stutzen 40 abgeführt wird. Das Rohfett gelangt in den Sumpf der Fallfilmkolonne 44 und wird von dort über die Leitung 41 abgezogen und auf den Verteiler im Kopf der Fallfilmkolonne 22 gegeben. Vom Kopf der Fallfilmkolonne 44 führt eine Dampfsammelleitung 23 zum Sumpf der Fallfilmkolonne 10, so dass zwischen den hintereinander arbeitenden Fallfilmkolonnen 10 und 44 ebenfalls Dampf- und Flüssigkeitsleitung besteht.

Darüberhinaus stimmt das Schema nach Fig. 2 mit dem Schema nach Fig. 1 überein, wobei sich gleiche Bezugzeichen auf gleiche Bauteile beziehen, so dass hinsichtlich der weiteren Erläuterung auf Fig. 1 verwiesen sei.

Die mit Bezugnahme auf die Fig. 1 und 2 erläuterten Fallfilmkolonnen 10, 22 und 44 müssen nicht notwendigerweise als Rohrbündelkolonnen ausgestaltet sein.

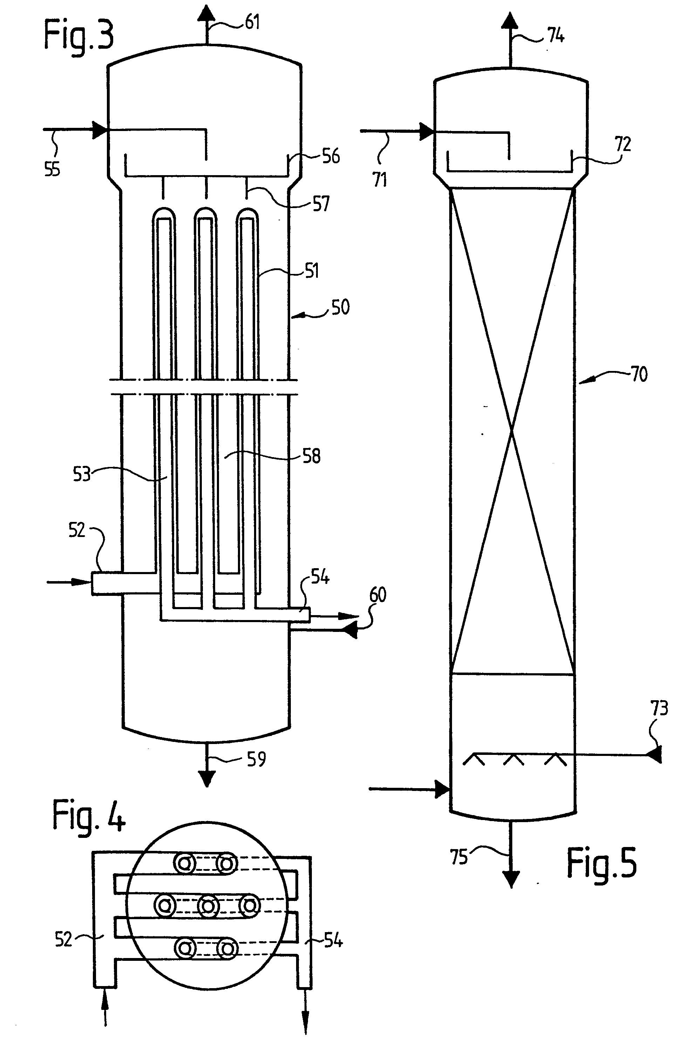

Eine alternative Ausbildung dieser Fallfilmkolonnen zeigt Fig. 3, sowie die entsprechende Querschnittsdarstellung nach Fig. 4. Bei der hier dargestellten Fallfilmkolonne 50 rieselt der Flüssigkeitsfilm an der Aussenseite von Kerzen 51 herab, durch deren Innenraum das Heizmedium geführt wird. Das letztere wird über den Stutzen 52 zugeführt und über Rohre 53, die sich mit ihrem offenen Ende bis nahe in die Kuppel der Kerzen 51 erstrecken, gesammelt und über den Ablaufstutzen 54 abgeführt. Die zu behandelnde Flüssigkeit wird über den Zulauf 55 auf den Verteiler 56 gegeben und gelangt von dort über Zulaufkanäle 57 auf die Kuppel der Kerzen 51, um an deren Aussenwand in dünner Schicht herabzufliessen. Der Zwischenraum zwischen benachbarten Kerzen definiert den Rieselkanal 58, dessen Äquivalent des hydraulischen Durchmessers beispielsweise 120 bis 150 mm betragen muss, sofern innerhalb der Kolonne 50 die Anfangszone der Gegenstrom-Fallfilm-Treibdampfdestillations-Zonen verwirklicht wird. Die behandelte Flüssigkeit wird über die Leitung 53 abgezogen, ohne dass sich im Sumpf der Kolonne 50 ein nennenswerter Flüssigkeitsinhalt ansammelt. Die in einer weiter stromabwärts gelegenen Fallfilmkolonne angefallenen Dämpfe werden über die Zuleitung 60 in den Sumpf der Kolonne 50 eingeführt und entweichen aus dieser, gemeinsam mit den aus der behandelten Flüssigkeit entfernten Verunreinigungen über die Abzugsleitung 61.

Die beschriebene Kolonne 50 eignet sich besonders für die Fettentsäuerung, wenn mit der Freisetzung relativ grosser Dampfmengen aus dem herabrieselnden Flüssigkeitsfilm gerechnet werden muss, beispielsweise, wenn der Gehalt an freien Fettsäuren mehr als 5 Gew.-% beträgt.

Mit Fig. 5 ist eine «echte» Rieselkolonne 70 dargestellt, in der insbesondere die Schlusszone der Gegenstrom-Fallfilm-Treibdampfdestillations-Zonen realisiert werden kann, weil hier nur ein sehr niedriger Wärmebedarf infolge des nur sehr geringen Verdampfungsanteils von zum Beispiel 5 kg/Tonne im Falle der Entsäuerung und von nur 1 kg/Tonne Fettdurchsatz im Falle der Desodorierung erforderlich ist. Derartige, gut isolierte, hochwirksame, «echte» Rieselsäulen sind bekannt und handelsüblich zugänglich. Dank spezieller Packungen innerhalb dieser «echten» Rieselsäulen gewährleisten diese über eine Länge von 6 bis 8 m hinweg 6 bis 8 theoretische Trennstufen und weisen hierzu lediglich einen Druckverlust von etwa 0,1 bis 0,5 mbar pro theoretische Trennstufe auf. Die Packungskörper bestehen aus schräg gefalteten Lamellen, die so aufeinandergeschichtet sind, dass offene, sich kreuzende Kanäle gebildet werden, die schräg zur Kolonnenachse verlaufen. Damit werden die Dämpfe beim Durchströmen der Packung in Richtung der parallelen Lagen vermischt. Durch Verdrehen aufeinanderfolgender Packungen erfolgt eine radiale Vermischung über den gesamten Kolonnenquerschnitt. An den Kreuzungsstellen der Rieselkanäle erfolgt eine ständige Erneuerung der Flüssigkeitsfilmoberfläche. Wegen des ausserordentlich geringen Druckverlustes in derartigen «echten» Rieselkolonnen können nach einem weiteren Gesichtspunkt der Erfindung bei Realisierung der Schlusszone in einer solchen Rieselkolonne dort die Dämpfe auch durch Rieselkanäle mit einem kleineren hydraulischen Durchmesser als 50 mm – oder dessen Äquivalent bei nicht-rohrförmigen Rieselkanälen – geleitet werden. Beispielsweise kann die Schlusszone in derartigen «echten» Rieselkolonnen realisiert werden, deren Packungen Rieselkanaldurchmesser bis herab zu 8 mm aufweisen.

Das in den stromaufwärts gelegenen Anfangszonen bereits behandelte Rohfett wird über den Zulauf 71 geführt und gelangt in den Verteiler 72 der Rieselkolonne 70. Aus dem Verteiler 72 gelangt die Flüssigkeit auf Packungen der oben beschriebenen Art. Im Sumpf der Rieselsäule 70 wird über den Einlass 73 Trägerdampf zugeführt und gemeinsam mit den freigesetzten Verunreinigungen am Kopf der Rieselsäule 70 über die Abzugsleitung 74 abgeführt. Das Produkt wird über die mit dem Regelventil $V_5$ (vgl. Fig. 1 oder 2) ausgestattete Leitung 75 abgezogen, ohne dass sich im Sumpf der Kolonne ein nennenswerter Flüssigkeitsstand ansammelt.

Die Anlage sieht wenigstens zwei verschiedene Gegenstrom-Fallfilm-Treibdampfdestillations-Zonen vor, die in verschiedenen, hintereinander arbeitenden und untereinander durch Dampf- und Flüssigkeitsleitung verbundenen Fallfilmkolonnen realisiert sind. Zu jeder Fallfilmkolonne gehört ein Verteilen, der die Rohbutter auf die Wände der Rieselkanäle – oder deren Äquivalente – verteilt, ferner Rieselkanäle mit im wesentlichen einheitlichem hydraulischem Durchmesser oder dessen Äquivalent bei nicht-rohrförmigen bzw. nichtzylindrischen Rieselkanälen, und schliesslich einen Flüssigkeitssammler am unteren Ende der Rieselkanäle. Die Flüssigkeitssammler sind so ausgebildet und angeordnet, dass sich in ihnen kein nennenswerter Flüssigkeitsstand ansammelt, sondern der sich einstellende Flüssigkeitsinhalt praktisch nur aus der Flüssigkeitsbenetzung der vorhandenen Wände resultiert.

Verschiedene Fallfilmkolonnen liegen dann vor, wenn deren hydraulische Durchmesser – bzw. deren Äquivalente – bei nicht-rohrförmigen (nichtzylindrischen) Rieselkanal-Durchmessern um mehr als 10 mm differieren. Die Rieselkanal-Durchmesser der Schlusszone betragen weniger als 120 mm und liegen vorzugsweise im Bereich von 50 bis 80 mm. Bei kleineren Rieselkanal-Durchmessern tritt im Hinblick auf den erforderlichen Treibdampfbedarf und die Rieselkanallänge von ca. 4 bis 10 m ein zu grosser Druckverlust auf. Sofern die Schlusszone zweizonig ausgebildet ist, weist die erste Teilzone (nach Fig. 2 in der Fallfilmkolonne 44 realisiert) vorzugsweise Rieselkanal-Durchmesser zwischen 120 und 80 mm auf; die hydraulischen Durchmesser der zweiten Teilzone (nach Fig. 2 in der Fallfilmkolonne 22 realisiert) liegen dann im Bereich zwischen 80 und 50 mm. Die Rieselkanal-Durchmesser der Anfangszone liegen im Bereich zwischen 120 und 150 mm.

Diese verschiedenen Gegenstrom-Fallfilm-Treibdampfdestillations-Zonen können in räumlich getrennten Fallfilmkolonnen realisiert werden. In diesem Falle verbindet eine stets geneigt verlaufende Rohrleitung 17 bzw. 41 den Kopf der folgenden Fallfilmkolonne 22 bzw. 44 mit dem Sumpf der vorausgegangenen Fallfilmkolonne 44 bzw. 10.

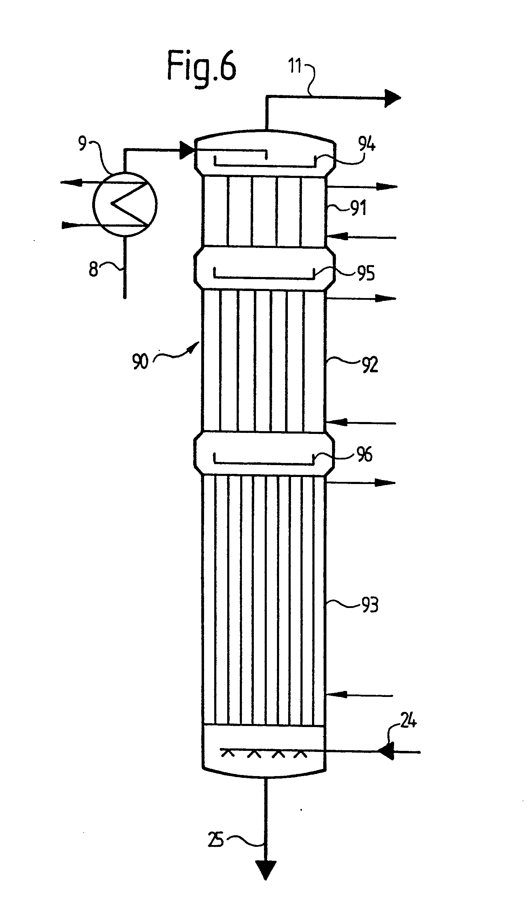

Nach einer alternativen Ausführungsform können die verschiedenen Fallfilmkolonnen zur Realisierung der Anfangszone und der Schlusszone einschl. der gegebenenfalls vorgesehenen zwei Teilzonen der Schlusszone der Gegenstrom-Fallfilm-Treibdampfdestillations-Tonen in einem einzigen Kolonnenanschuss 90 integriert sein, wie das schematisch mit Fig. 6 dargestellt ist.

In dem dargestellten Kolonnenschuss 90 sind drei verschiedene Fallfilmkolonnen 91, 92 und 93 integriert. In der Fallfilmkolonne 91 wird die Anfangszone und in den beiden Fallfilmkolonnen 92 und 93 werden die beiden Teilzonen der Schlusszone der Gegenstrom-Fallfilm-Treibdampfdestillations-Zonen realisiert. Schematisch ist angedeutet, dass in Fliessrichtung der Flüssigkeit die hydraulischen Durchmesser der Rieselkanäle in den Fallfilmkolonnen 91, 92 und 93 fortlaufend kleinere Werte aufweisen, um den oben genannten Bedingungen zu genügen. Zweckmässigerweise nimmt in Richtung der herabfliessenden Flüssigkeit die Rohrzahl pro Fallfilmkolonne zu, um wenigstens eine gleichbleibende, vorzugsweise jedoch zunehmende Gesamt-Umfangsfläche zu realisieren. Jede einzelne Fallfilmkolonne 91, 92 und 93 ist mit einer Zuleitung und einer Ableitung für ein Heiz-Medium versehen, wie das schematisch angedeutet ist. Zum Betrieb wird über die Leitung 8 herangeführte, bereits vorgewärmte Flüssigkeit im Hochtemperatur-Wärmetauscher 9 auf die Arbeitstemperatur gebracht und gelangt dann auf den Verteiler 94 in der Fallfilmkolonne 91. Die im Sumpf der Fallfilmkolonne 91 ankommende Flüssigkeit wird ohne Ansammlung eines nennenswerten Flüssigkeitsstandes sofort über den Verteiler 95 erneut auf die Rieselkanäle der Fallfilmkolonne 92 verteilt. Das nämliche erfolgt im Sumpf der Fallfilmkolonne 92, wo die Flüssigkeit vom Verteiler 96 erneut auf die Rieselkanäle der Fallfilmkolonne 93 verteilt wird. Aus dem Sumpf der Kolonne 93 wird die Flüssigkeit schliesslich über die Leitung 25 abgezogen. In den Sumpf der Fallfilmkolonne 93 wird über die Leitung 24 Treibdampf eingeführt, der nach Durchströmen der verschiedenen Fallfilmkolonnen 93, 92 und 91 schliesslich gemeinsam mit den aus der Flüssigkeit abgetrennten Verunreinigungen am Kopf der Fallfilmkolonne 91 über die Sammelleitung 11 abgezogen wird.

Diese Bauweise, bei der sämtliche Fallfilmkolonnen in einen einzigen Kolonnenschuss integriert sind, wird bevorzugt, weil die Verbindungsleitungen ausserordentlich kurz werden, was wiederum die Verweilzeit der Cacaobutter im Hochtemperaturteil der Anlage verringert. Mit dieser Ausführungsform kann die Verweilzeit der einzelnen Flüssigkeitsteilchen im Hochtemperaturteil der Anlage unterhalb 40 sec gehalten werden, obwohl drei getrennte, hintereinander arbeitende und untereinander in Dampf- und Flüssigkeitsleitung stehende Gegenstrom-Fallfilm-Treibdampfdestillations-Zonen vorgesehen sind. Trotz dieser drei verschiedenen Zonen ist die Differenz zwischen dem Treibdampfdruck im Sumpf der Kolonne 93 und dem (Treibdampf plus dampfförmige Verunreinigung)- Druck im Kopf der der Fallfilmkolonne 91 sehr gering und beträgt beispielsweise lediglich 1,5 mbar.

Sofern eine Flashbehandlung vorgesehen ist – etwa weil die rohe Cacaobutter mehr als 5 Gew.-% freie Fettsäuren und andere Leichtsieder enthält – ist der Flashbehälter 46 (vgl. Fig. 1a) zweckmässigerweise zwischen dem Hochtemperatur-Wärmetauscher 9 und der ersten Fallfilmkolonne 10 eingeschaltet. Vorzugsweise ist dieser Flashbehälter oberhalb des Kopfes dieser ersten Fallfilmkolonne 10 angeordnet, so dass das geflashte Gemisch unter der Wirkung seines Gewichtes auf den Verteiler in der ersten Fallfilmkolonne 10 gelangt. Die aus dem Flashbehälter 46 abgezogenen Dämpfe werden über eine Leitung 47 dem Sumpf des Kondensationssystems 12 zugeführt. Auch die Flashzone kann innerhalb einer Fallfilm- bzw. Rieselkolonne realisiert sein – beispielsweise innerhalb einer, mit den Fig. 3 und 4 erläuterten, mit Kerzen 51 ausgerüsteten Fallfilmkolonne 50 (Länge ca. 1 bis 2 m) – wobei jedoch keine Treibdampfzuführung erfolgt. Daneben können einfache und übliche Flashbehälter 46 bekannter Bauart eingesetzt werden. Nach einem weiteren vorteilhaften Gesichtspunkt der Erfindung ist auch der Flashbehälter 46 in den Kolonnenschuss 90 integriert (in Fig. 6 nicht dargestellt.

Die nachstehenden Beispiele dienen zur weiteren Erläuterung der Erfindung, ohne diese einzuschränken.

Beispiel 1:

Zum Entsäuern von Cacaobutter ist eine Anlage gemäss Fig. 1 zum Durchsatz von 2000 kg/h ausgelegt. Der Gehalt der Cacaobutter an freien Fettsäuren und anderen Leichtsiedern beträgt ca. 5 Gew.-%.

Die Cacaobutter wird dem Lagertank 1 bei einer Temperatur von 60 °C entnommen. Der Kopf der Eingangsstufe 4 wird bei einem Druck von 199,5 mbar betrieben. Im Wärmetauscher 27 erfolgt die Aufheizung des entgasten, aber noch wasserhaltigen Fettes (Wassergehalt im Mittel 0,1 Gew.-%) bis auf 175 °C im Tausch mit dem aus dem Sumpf der Fallfilmkolonne 22 abgezogenen Produkt. Die dabei im Tauscher 27 auszutauschende Wärmemenge beträgt 500 000 kJ/h (120 000 kcal/h). Hierbei wird das Fertigfett bis auf 84 °C abgekühlt und kann dann mittels üblichem Kühlwasser im Schlusskühler 28 zur Verbesserung der Lagerstabilität bis auf 60 °C heruntergekühlt werden, wobei 93 000 kJ/h mittels Kühlwasser von z.B. 40 °C Eintrittstemperatur und 50 °C Austrittstemperatur aubzuführen sind. Die im Wärmetauscher 27 auf 175 °C aufgeheizte Rohbutter wird im Hochtemperatur-Wärmetauscher 9 auf 190 °C aufgeheizt, wozu 72 000 kJ/h erforderlich sind. Mit dieser Temperatur erfolgt die Aufgabe auf den Kopfverteiler der Fallfilmkolonne 10, in der die Hauptabtrennung der flüchtigen Begleitstoffe bis auf einen Restgehalt von ca. 0,5 Gew.-% freier Fettsäure im ablaufenden Fett geschieht. Die Fallfilmkolonne 10 besitzt 8 Rohre mit einem Innendurchmesser von 133,1 mm und einer senkrechten Länge von 3 m, an deren Innenwand das Rohfett herabfliesst. Die Schichtdicke des Fettfilms beträgt ca. 0,45 mm, und seine Reynolds-Zahl liegt bei etwa 126,5. Bei einem Durchsatz von stündlich 2000 kg roher Cacaobutter und einem Trägerdampfdurchsatz von 1,8 bis 2 Gew.-% des Zulaufs herrscht bei einem Arbeitsdruck im Kopf der Fallfilmkolonne 10 von 1,99 mbar lediglich ein Druckverlust von 0,2 mbar. Das über den Stutzen 36 zugeführte Heizmedium – HT-Öl – wird mit einer Temperatur von 200 bis maximal 205 °C zugeführt, so dass das unten aus der Kolonne 10 ablaufende Öl eine Temperatur von maximal 200 °C aufweist.

Die aus der ersten Gegenstrom-Fallfilm-Treibdampfdestillations-Zone 10 mit Rieselkanal-Durchmessern von 133,1 mm über eine stets fallende Leitung 17 ablaufende Cacaobutter wird mit ca. 200 °C auf den Verteiler der Fallfilmkolonne 22 gegeben. Diese als senkrecht stehendes Rohrbündel ausgebildete Fallfilmkolonne besteht aus 15 Rohren von 72 mm Innendurchmesser und einer Länge von 8 m. Die an der Innenwand der Rohre herabfliessende Flüssigkeit weist eine Reynolds-Zahl um 167 auf; die Schichtdicke des Flüssigkeitsfilms beträgt etwa 0,425 mm. Als Heizmedium dient HT-Öl mit einer Temperatur von 205 °C. Die unten aus der Fallfilmkolonne 22 mit maximal 200 °C ablaufende Cacaobutter besitzt einen Restsäuregehalt kleiner 0,04%.

Über die Zuleitung werden stündlich 36 bis 40 kg Edeldampf eingeführt. Hierbei ergibt sich ein Druckverlust von 0,94 mbar in der Fallfilmkolonne 22, so dass für beide Fallfilmkolonnen 22 und 10 der Gesamtdruckverlust lediglicht 1,14 mbar beträgt.

Die Zugabe eines Stabilisators (Zitronensäure) erfolgt mittels Dosierpumpe 29 in die nach dem Wärmetauscher 27 angeordnete Pumpenzwischenvorlage 45.

Beispiel 2:

Zum Entsäuern von Cacaobutter dient eine dreistufige Anlage gemäss Fig. 2 zum Durchsatz von 2000 kg/h. Der Gehalt der zulaufenden Cacaobutter an freien Fettsäuren beträgt wiederum ca. 5 Gew.-%.

Soweit besondere Angaben fehlen, erfolgt die Verfahrensführung im wesentlichen analog zu Beispiel 1.

Wie im Beispiel 1 wird die vorher entgaste und teilentwässerte Cacaobutter mit einer Arbeitstemperatur von 190 °C auf den Verteiler der obersten Filmkolonne 10 gegeben. Im vorliegenden Falle handelt es sich wiederum um eine Rohrbündelkolonne mit 8 Rohren von 133,7 mm Innendurchmesser und einer senkrechten Rohrlänge von 3 m. Der Arbeitsdruck im Kopf der Kolonne 10 wird bei 1,99 mbar gehalten. Mittels der Filmkolonne 10 wird die Hauptmenge an freien Fettsäuren wie im Beispiel 1 bis auf einen Restgehalt von 0,5 Gew.-% im ablaufenden Fett destillativ abgetrennt.

Die den Sumpf der Kolonne 10 über die Leitung 17 mit ca. 200 °C und geringstmöglichen Flüssigkeitsinhalt, d. h., praktisch ohne Flüssigkeitsstand verlassende Cacaobutter wird mit dieser Temperatur auf den im Kopf der Fallfilmkolonne 44 angeordneten Verteiler gegeben. Die Fallfilmkolonne 44 ist ebenfalls als Rohrbündelkolonne mit 12 Rohren von 83,9 mm Innendurchmesser und 3 m senkrechter Länge ausgebildet. In dieser Zone ermässigt sich der Gehalt an freien Fettsäuren pro Stunde um weitere 8 kg.

Die aus dem Sumpf der Kolonne 44 über die Leitung 41 wiederum praktisch ohne Flüssigkeitsstand und damit ohne merklichen Flüssigkeitsinhalt mit ca. 200 °C ablaufende Cacaobutter wird mit dieser Temperatur auf den Verteiler der Fallfilmkolonne 22 gegeben. Diese ist ebenfalls als senkrecht stehende Filmrohrkolonne ausgebildet und besitzt 14 Rohre von 71,1 mm Innendurchmesser und 5 m senkrechter Länge.

Die entsäuerte und desodorierte Cacaobutter wird über die Leitung 25 mit einer Temperatur von maximal 200 °C abgezogen und durch Wärmetausch gegen die Rohbutter im Wärmetauscher 27 auf 84 °C abgekühlt, wobei sich der Zulauf bis auf 175 °C aufheizt. Anschliessend wird sie noch im Wärmetauscher 27 auf 60 °C heruntergekühlt. Auch hier erfolgt die Zugabe eines Stabilisators mittels Dosierpumpe 29 in die Pumpenzwischenvorlage 45, die nach dem Wärmetauscher 27 angeordnet ist.

Beispiel 3:

Zur Entsäuerung besonders hochwertiger Schokoladenrohstoffe nach Art der Cacaobutter haben sich die nachfolgend angegebenen Arbeitsbedingungen einer zweistufigen Anlage gemäss Fig. 1 als besonders geeignet erwiesen.

Soweit besondere Angaben fehlen, erfolgt dabei die Verfahrensführung im wesentlichen analog zu Beispiel 1.

Im vorliegenden Falle wird die ursprünglich 5 Gew.-% freie Fettsäuren und andere Leichtsieder enthaltende Cacaobutter nach Entgasung und Teilentwässerung mit einer Arbeitstemperatur von 185 °C auf den Verteiler der obersten Filmkolonne 10 gegeben, die mit 13 Rohren von 133,7 mm Innendurchmesser und 3 m senkrechter Rohrlänge ausgestattet ist. Der Arbeitsdruck am Kopf der Kolonne 10 wird auf 1,33 mbar eingestellt. Mittels der Filmkolonne 10 wird die Hauptmenge an freien Fettsäuren und flüchtigen Verunreinigungen wie im Beispiel 1 bis auf einen Restgehalt von 0,5 Gew.-% im ablaufenden Fett abgetrennt.

Die den Sumpf der Kolonne 10 mit ca. 195 °C und geringstmöglichem Flüssigkeitsinhalt, d. h. praktisch ohne Flüssigkeitsstand über die Rohrleitung 17 verlassende Cacaobutter wird mit ca. 195 °C auf den Verteiler der Fallfilmkolonne 22 gegeben. Diese als senkrecht stehendes Rohrbündel ausgebildete Filmkolonne besteht aus 16 Rohren von 83,9 mm Innendurchmesser. Die an der jeweiligen Innenwand der Rohre herablaufende Flüssigkeit weist eine Reynolds-Zahl von 111,8 auf, wobei die Schichtdicke des herablaufenden Flüssigkeitsfilmes 0,46 mm beträgt. Als Heizmedium dient z. B. HT-Öl, dessen Eintrittstemperatur 200 °C nicht überschreiten darf. Die unten aus der Filmkolonne 22 mit max. 195 °C ablaufende Cacaobutter besitzt einen Restgehalt von < 0,04 %. Über Zuleitung 24 werden stündlich 30 bis 35 kg Edeldampf als Strippmittel für die Abtrennung der Leichtsieder einschl. der freien Fettsäureanteile zugeführt. Hierbei ergibt sich ein Gesamtdruckverlust von 1,11 mbar, von dem 0,2 mbar auf die erste und 0,91 mbar auf die zweite Stufe entfallen.

Nachstehend sind die wichtigsten Parameter für die Entsäuerung von Cacaobutter mittels einer zwei- bzw. dreistufigen Gegenstromfilmanlage aufgeführt.

Arbeitsbedingungen für die Entsäurerung von 2000 kg/h Cacaobutter mit 5% freier Fettsäure bei einem
a) Arbeitsdruck von 1,99 mbar im Kopf der ersten Stufe, die mit einer Zulauftemperatur von 190° C betrieben wird.

| Fallfilm-kolonne (Nr.) | Rohr-durchmesser (mm) | Rohr-länge (m) | Rohr-zahl | Re-Dampf | Re-Fl | Film-dicke (mm) | Verweil-zeit (sec) | Druck-verlust (mbar) |
|---|---|---|---|---|---|---|---|---|
| a1) Entsäuerung in zwei Filmstufen gemäß Fig. 1 | | | | | | | | |
| 10 | 133,7 | 3 | 8 | 4142 | 126,5 | 0,45 | 6,60 | 0,26 |
| 22 | 71,1 | 8 | 15 | 1018 | 167,6 | 0,425 | 17,22 | 1,25 |
| a2) Entsäuerung in drei Filmstufen gemäß Fig. 2 | | | | | | | | |
| 10 | 133,7 | 3 | 8 | 4142 | 126,5 | 0,45 | 6,60 | 0,26 |
| 44 | 83,9 | 3 | 12 | 1078 | 167,6 | 0,43 | 6,17 | 0,40 |
| 22 | 71,1 | 5 | 14 | 836 | 168,8 | 0,43 | 10,21 | 0,84 |

(Fortsetzung)

| Fallfilm-kolonne (Nr.) | Rohr-durchmesser (mm) | Rohr-länge (m) | Rohr-zahl | Re-Dampf | Re-Fl | Film-dicke (mm) | Verweil-zeit (sec) | Druck-verlust (mbar) |
|---|---|---|---|---|---|---|---|---|
| b) Arbeitsdruck von 1,33 mbar im Kopf der ersten Stufe gemäß Beispiel 3 in einer zwei-stufigen Filmanlage gemäß Fig. 1 | | | | | | | | |
| 10 | 133,7 | 3 | 13 | 3381 | 73,9 | 0,40 | 9,6 | 0,20 |
| 22 | 83,9 | 9 | 16 | 827 | 111,8 | 0,46 | 26,5 | 0,91 |

**Patentansprüche**

1. Verfahren zum Desodorieren und/oder Entsäuern von hochsiedenden Flüssigkeiten nach dem Prinzip der kontinuierlichen Gegenstrom-Fallfilm-Treibdampfdestillation in einem von einem von aussen aufgezwungenen Temperaturfeld, wobei die erwärmte Flüssigkeit als Dünnschicht einer Schichtdicke kleiner 1 mm an der Wand vertikal angeordneter, Rieselkanäle bildender Flächen herabfliesst, von denen wenigstens ein Teil auf einer höheren Temperatur als die herabfliessende Flüssigkeit gehalten wird, und ausschliesslich im Sumpf der Schlusszone Wasserdampf zugeführt und im Gegenstrom durch diese Rieselkanäle geführt wird, dadurch gekennzeichnet, dass zum Desodorieren und/oder Entsäuern von Cacaobutter und Cacaobutter-Ersatzstoffen die nachstehenden Bedingungen eingehalten werden:

a) es werden wenigstens zwei hintereinander arbeitende und untereinander in Dampf- und Flüssigkeitsleitung stehende Gegenstrom-Fallfilm-Treibdampfdestillations-Zonen eingesetzt, von denen die in Richtung der herabfliessenden Flüssigkeit stromabwärts gelegene Schlusszone kleinere hydraulische Rieselkanal-Durchmesser oder deren Äquivalent bei nicht-rohrförmigen Rieselkanälen aufweist, als die stromaufwärts gelegene Anfangszone;

b) die Flüssigkeit wird – gegebenenfalls nach vorheriger Entgasung, Entwässerung und Entschleimung – mit einer Temperatur zwischen 150 und 200 °C auf den Kopf der Anfangszone gegeben;

c) im Sumpf der Schlusszone liegt die Temperatur des entsäuerten und/oder desodorierten Produktes max. 10 °K über der Zulauftemperatur in der Anfangszone, wozu die Eintrittstemperaturen des im Gegenstrom bzw. im Kreuz/Gegenstrom zum herabfliessenden Flüssigkeitsfilm geführten Heizmittels die Filmablauftemperatur in keinem Falle um mehr als 10 °K übersteigt und unter 205 °C gehalten wird;

d) der Arbeitsdruck wird im Kopf der Anfangszone unter 2,0 mbar und im Sumpf der Schlusszone max. 1,6 mbar über demjenigen der Anfangszone gehalten;

e) in den Flüssigkeitssammlern der hintereinander arbeitenden Zonen wird die Bildung eines nennenswerten Flüssigkeitsstandes vermieden; und

f) der Trägerdampf wird in einer Menge von 2 bis 10 kg Dampf pro 100 kg aufgegebener Flüssigkeit zugeführt.

2. Verfahren nach Anspruch 1, dadurch gekennzeichnet, dass die Reynold'sche Zahl des herabfliessenden Flüssigkeitsfilms zwischen 50 und 190, vorzugsweise zwischen 100 und 180 gehalten wird.

3. Verfahren nach Anspruch 1 oder 2, dadurch gekennzeichnet, dass in der Richtung der herabfliessenden Flüssigkeit folgenden Gegenstrom-Fallfilm-Treibdampfdestillations-Zone eine höhere Reynold'sche Zahl des Flüssigkeitsfilmes eingestellt wird als in der vorausgegangenen Zone.

4. Verfahren nach einem der Ansprüche 1 bis 3, dadurch gekennzeichnet, dass die Flüssigkeit mit einer Temperatur zwischen 160 und 190 °C auf den Kopf der Anfangszone gegeben wird.

5. Verfahren nach einem der Ansprüche 1 bis 4, dadurch gekennzeichnet, dass die Temperatur des entsäuerten und/oder desodorierten Produktes im Sumpf der Schlusszone maximal 5 °K über der Zulauftemperatur in der Anfangszone gehalten wird; und die Eintrittstemperatur des im Gegenstrom bzw. im Kreuz/Gegenstrom zum herabfliessenden Film geführten Heizmittels um nicht mehr als 5 °K über der Filmablauftemperatur, in jedem Falle unter 195 °C gehalten wird.

6. Verfahren nach einem der Ansprüche 1 bis 5, dadurch gekennzeichnet, dass der Trägerdampf in einer Menge von 3 bis 8 kg Dampf pro 100 kg aufgegebene Flüssigkeit zugeführt wird.

7. Verfahren nach einem der Ansprüche 1 bis 6, dadurch gekennzeichnet, dass die Rieselkanaldurchmesser oder deren Äquivalente bei nicht-rohrförmigen Rieselkanälen der zu verschiedenen Gegenstrom-Fallfilm-Treibdampfdestillations-Zonen gehörenden Rieselkanäle um wenigstens 10 mm differieren.

8. Verfahren nach einem der Ansprüche 1 bis 7, dadurch gekennzeichnet, dass in der unmittelbar an die Flüssigkeitsaufgabe anschliessenden, wenigstens zwei theoretische Trennstufen gewährleistenden Anfangszone die Dämpfe durch Rieselkanäle mit einem hydraulischen Durchmesser von 120 bis 150 mm oder dessen Äquivalent bei nicht-rohrförmigen Rieselkanälen strömen.

9. Verfahren nach einem der Ansprüche 1 bis 8, dadurch gekennzeichnet, dass in der wenigstens sechs theoretische Trennstufen gewährleistenden Schlusszone die Dämpfe durch Rieselkanäle mit einem hydraulischen Durchmesser kleiner 120 mm und vorzugsweise kleiner 80 mm oder dessen Äquivalent bei nicht-rohrförmigen Rieselkanälen strömen.

10. Verfahren nach Anspruch 9, dadurch gekennzeichnet, dass die Schlusszone in zwei Teilzonen unterteilt ist, wobei in der an die Anfangszone anschliessenden ersten Teilzone dieser Schlusszone die Dämpfe durch Rieselkanäle mit einem hydraulischen Rieselkanaldurchmesser von 120 bis 80 mm oder dessen Äquivalent bei nicht-rohrförmigem Rieselkanaldurchmesser strömen; und in der sich unmittelbar anschliessenden zweiten Teilzone die Dämpfe durch Rieselkanäle mit einem hydraulischen Rieselkanaldurchmesser kleiner 80 mm oder dessen Äquivalent bei nicht-rohrförmigem Rieselkanaldurchmesser strömen.

11. Verfahren nach einem der Ansprüche 1 bis 10, dadurch gekennzeichnet, dass die verschiedenen Gegenstrom-Fallfilm-Treibdampfdestillations-Zonen innerhalb an sich bekannter, angepasster Fallfilmkolonnen verwirklicht sind.

12. Verfahren nach einem der Ansprüche 1 bis 11, dadurch gekennzeichnet, dass der Druckverlust über sämtliche Gegenstrom-Fallfilm-Treibdampfdestillations-Zonen kleiner 1,6 mbar und vorzugsweise kleiner 1,2 mbar gehalten wird.

13. Verfahren nach einem der Ansprüche 1 bis 12, dadurch gekennzeichnet, dass die Schichtdicke des Flüssigkeitsfilms zwischen 0,35 und 0,55 mm gehalten wird.

14. Verfahren nach einem der Ansprüche 1 bis 13, dadurch gekennzeichnet, dass in der Anfangszone die Temperatur der Rieselkanalwände max. um 10 °K und vorzugsweise um 2 bis 4 °K über der Filmablauftemperatur und in der Schlusszone in etwa auf der Filmablauftemperatur gehalten wird.

15. Verfahren nach einem der Ansprüche 1 bis 14, dadurch gekennzeichnet, dass die Gesamtverweildauer bestimmter Flüssigkeitsteilchen in der Anfangszone und in der Schlusszone unter 40 sec gehalten wird.

16. Verfahren nach einem der Ansprüche 1 bis 15, dadurch gekennzeichnet, dass die zu behandelnde Flüssigkeit in einer Vorstufe unter einem Druck von 60 bis 280 mbar und bei einer Temperatur zwischen 40 und 100 °C entgast und mit dem unter diesen Bedingungen verbleibenden Wassergehalt von 0,05 bis 0,2 Gew.-% in die Anfangszone eingeführt wird.

17. Verfahren nach einem der Ansprüche 1 bis 16, dadurch gekennzeichnet, dass im Falle von Flüssigkeiten mit besonders hohem Anteil an freien Fettsäuren und anderen Leichtsiedern, unmittelbar vor Eintritt in die Anfangszone eine Flashbehandlung bei praktisch gleichem Arbeitsdruck wie in der Anfangszone vorgenommen wird, und die bei der Flashung frei werdenden Dämpfe abgetrennt und kondensiert werden.

18. Verfahren nach einem der Ansprüche 1 bis 17, dadurch gekennzeichnet, dass in den Sumpf der Schlusszone oder in das dort abgezogene und teilweise abgekühlte Produkt Komplexbildner eingeführt wird.

19. Verfahren nach einem der Ansprüche 1 bis 18, dadurch gekennzeichnet, dass als Wasserdampf Edeldampf dient, der aus vorher destilliertem und entgastem Wasser erzeugt worden ist.

**Claims**

1. A process for deodorizing and/or physically refining high-boiling liquids according to the principle of continuous countercurrent falling film stripping steam distillation in an externally imposed temperature field, wherein the heated liquid flows down as a thin film having a thickness of less than 1 mm along the walls of vertically disposed surfaces forming trickle passages, at least a part of said surfaces being maintained at a temperature higher than the temperature of the downflowing liquid, and steam is supplied exclusively to the bottom of the final zone and is passed in countercurrent flow to the downflowing liquid through said trickle passages, characterized in that for deodorizing and/or physical refining of cocoa butter and cocoa butter substitutes the following conditions are observed:

(a) there are at least two serially operating countercurrent falling film stripping steam distillation zones being in vapor and liquid communication with each other, wherein the final zone disposed downstream in the direction of the downflowing liquid having smaller trickle passage hydraulic equivalent diameters, or the equivalent thereof in case of non-tubular trickle passages, than the upstream located initial zone;

(b) charging the liquid to the top of the initial zone at a temperature ranging from 150 to 200 °C – optionally after previous degasification, dehydration and degumming;

(c) maintaining the temperature of the physically refined and/or deodorized product in the bottom of the final zone at a maximum of 10 °K in excess of the inlet temperature to the initial zone, wherein the inlet temperature of the heating medium, passed in coutercurrent or cross-coutercurrent flow to the downflowing liquid film, being maintained below 250 °C and at a maximum of 10 °K above the temperature of the downflowing liquid film;

(d) maintaining the working pressure in the top of the initial zone below 2.0 mbar and maintaining the working pressure in the bottom of the final zone no more than 1.6 mbar in excess of that in the initial zone;

(e) providing liquid accumulators in the serially operating zones and avoiding in the liquid accumulators of the serially operating zones the formation of any significant liquid level;

(f) supplying the stripping steam in an amount of 2 to 10 kg of steam per 100 kg of charged liquid.

2. The process according to claim 1, characterized in by maintaining the Reynold's number of the downflowing liquid film between 50 and 190, preferably between 100 and 180.

3. The process according to claim 1 or 2, characterized in by maintaining a higher Reynold's number for the liquid film in the succeeding countercurrent falling film stripping steam distillation zone, as compared to that in the preceding zone in the direction of the downflowing liquid.

4. The process according to anyone of claims 1 to 3, characterized in by charging the liquid to the top of the initial zone at a temperature between 160 and 190 °C.

5. The process according to anyone of claims 1 to 4, characterized in by maintaining the temperature of the physically refined and/or deodorized product in the bottom of the final zone at a maximum of 5 °K in excess of the inlet temperature in the initial zone; and maintaining the inlet temperature of the heating medium, which is passed in countercurrent or cross-countercurrent flow to the downflowing film, at a maximum of 5 °K in excess of the film discharge temperature, and in any case below 195 °C.

6. The process according to anyone of claims 1 to 5, characterized in by supplying the stripping steam in an amount of from 3 to 8 kg of steam per 100 kg of liquid feed.

7. The process according to anyone of claims 1 to 6, characterized in that the trickle passage diameters or the equivalents thereof in case of non-tubular trickle passages, of the trickle passages associated with different countercurrent falling film stripping steam distillation zones differ by at least 10 mm.

8. The process according to anyone of claims 1 to 7, characterized in that flowing the vapors in the initial zone located immediately adjacent the liquid charge and providing at least two theoretical separating stages through trickle passages having a hydraulic equivalent diameter ranging from 120 to 150 mm, or the equivalent thereof in case of non-tubular trickle passages.

9. The process according to anyone of claims 1 to 8, characterized in by flowing the vapors in the final zone providing at least six theoretical separating stages through trickle passages having a hydraulic equivalent diameter of less than 120 mm, preferably less than 80 mm, or the equivalent thereof in case of non-tubular trickle passages.

10. The process according to claim 9, characterized in that the final zone being divided into two sub-zones; flowing the vapors in the first sub-zone directly adjacent the initial zone through trickle passages having a hydraulic trickle passage equivalent diameter of 80 to 120 mm, or the equivalent thereof in case of non-tubular trickle passage diameters; and flowing the vapors in the second sub-zone directly adjacent to said first sub-zone through trickle passages having a hydraulic trickle passage equivalent diameter of less than 80 mm or the equivalent thereof in case of non-tubular trickle passage diameters.

11. The process according to anyone of claims 1 to 10, characterized in by providing said various countercurrent falling film stripping steam distillation zones in per se known falling film columns, adapted accordingly.

12. The process according to anyone of claims 1 to 11, characterized in by maintaining the pressure loss through all countercurrent falling film stripping steam distillation zones less than 1.6 mbar and preferably less than 1.2 mbar.

13. The process according to anyone of claims 1 to 12, characterized in by maintaining the thickness of the liquid film between 0,35 and 0,55 mm.

14. The process according to anyone of claims 1 to 13, characterized in by maintaining the temperature of the trickle passage walls in the initial zone at a maximum of 10 °K, preferably at a maximum of 2 to 4 °K above the liquid film discharge temperature, and maintaining the temperature of the trickle passage walls in the final zone at about the film discharge temperature.

15. The process according to anyone of claims 1 to 14, characterized in by keeping the total residence time of specific liquid particles in the initial zone and in the final zone below 40 seconds.

16. The process according to anyone of claims 1 to 15, characterized in by degasifying the liquid to be treated in a pretreatment stage under a pressure of 60 to 280 mbar and at a temperature between 40 to 100 °C and introducing said liquid into the initial zone with a remaining water content of from 0,05 to 0,2% by weight.

17. The process according to anyone of claims 1 to 16, characterized in that in case of liquids having a particularly high proportion of free fatty acids and other low-boiling components, providing a flash treatment immediately before entry into the initial zone, wherein said flash treatment is carried out at substantially the same working pressure as in the initial zone, and separating and condensing the vapors released upon the flashing.

18. The process according to anyone of claims 1 to 17, characterized in by introducing a complexing agent into the bottom of the final zone or into the product withdrawn therefrom and being partially cooled.

19. The process according to anyone of claims 1 to 18, characterized in by employing as said steam super-pure steam produced from previously distilled and degasified water.

**Revendications**

1. Procédé de désodorisation et/ou de désacidification de liquides à point d'ébullition élevé selon le principe de la distillation continue avec entraînement à la vapeur, à film en chute libre et à contre-courant, dans une plage de température imposée de l'extérieur, ledit procédé consistant à faire s'écouler vers le bas le liquide chauffé sous la forme d'une couche mince d'une épaisseur inférieure à 1 mm, le long de la paroi de surfaces qui sont disposées verticalement et forment des canaux de ruissellement, une partie, au moins, desdites surfaces étant maintenue à une température plus élevée que celle du liquide descendant, et à admettre exclusivement dans le bas de la zone de queue, de la vapeur d'eau et à l'envoyer à contre-courant à travers lesdits canaux de ruissellement, caractérisé en ce qu'il consiste, pour la désodorisation et/ou la désacidification du beurre de cacao et de ses produits de substitution, à maintenir les conditions spécifiées ci-après:

a) on met en œuvre au moins deux zones de distillation par entraînement à la vapeur, à film en chute libre et à contre-courant, lesdites zones fonctionnant l'une après l'autre et communiquant entre elles par des conduits pour la vapeur et le liquide, et l'une desdites zones, qui est la zone de queue et s'étend en aval par rapport à la direction d'écoulement du liquide descendant, comporte des canaux de ruissellement ayant un diamètre hydraulique ou son équivalent, dans le cas de canaux de ruissellement non tubulaires, plus petit que celui des canaux de ruissellement de la zone initiale en amont;

b) le liquide qui, en cas de nécessité, aura été préalablement dégazé, déshydraté et débarrassé de mucilage, est introduit dans la tête de la zone initiale à une température comprise entre 150 et 200°C;

c) dans le bas de la zone de queue, la température du produit désacidifié et/ou désodorisé est supérieure de 10°K, au plus, à la température d'entrée dans la zone initiale, et, à cet effet, la température d'admission du caloporteur qui est conduit à contre-courant ou en courants croisés/inverses par rapport au film de liquide descendant, ne dépasse, en aucun cas, la température d'écoulement du film de plus de 10°K et est maintenue inférieure à 205°C;

d) la pression de régime est maintenue dans la tête de la zone initiale à une valeur inférieure à 2,0 mbar, et dans le bas de la zone de queue à une valeur supérieure de 1,6 mbar, au plus, à la pression de régime de la zone initiale;

e) on évite la formation d'une nappe de liquide substantielle dans les collecteurs de liquide des zones fonctionnant en série; et

f) la quantité admise de vapeur porteuse est de 2 à 10 kg sur 100 kg de liquide chargé.

2. Procédé suivant la revendication 1, caractérisé en ce qu'il consiste à maintenir le nombre de Reynolds du film de liquide descendant entre 50 et 190, de préférence entre 100 et 180.

3. Procédé suivant la revendication 1 ou 2, caractérisé en ce que, dans la zone de distillation par entraînement à la vapeur, à film en chute libre et à contre-courant, qui est la zone suivante par rapport à la direction du liquide descendant, il consiste à ajuster le nombre de Reynolds du film de liquide à une valeur supérieure à celle rencontrée dans la zone précédente.

4. Procédé suivant l'une quelconque des revendications 1 à 3, caractérisé en ce qu'il consiste à introduire le liquide dans la tête de la zone initiale, à une température comprise entre 160 et 190°C.

5. Procédé suivant l'une quelconque des revendications 1 à 4, caractérisé en ce qu'il consiste à maintenir la température du produit désacidifié et/ou désodorisé dans le bas de la zone de queue à 5°K, au maximum, au-dessus de la température d'entrée dans la zone initiale, et à maintenir la température d'admission du caloporteur qui est conduit en contre-courant ou en courants croisés/inverses par rapport au film descendant, à moins de 5°K au-dessus de la température d'écoulement du film, mais, en tout cas, à une valeur inférieure à 195°C.

6. Procédé suivant l'une quelconque des revendications 1 à 5, caractérisé en ce qu'il consiste à introduire la vapeur porteuse dans une quantité de 3 à 8 kg sur 100 kg de liquide chargé.

7. Procédé suivant l'une quelconque des revendications 1 à 6, caractérisé en ce que les diamètres ou, dans le cas de canaux de ruissellement non tubulaires, leurs équivalents, des canaux de ruissellement associés à des zones différentes de distillation par entraînement à la vapeur, à film en chute libre et à contre-courant, diffèrent les uns des autres de 10 mm, au moins.

8. Procédé suivant l'une quelconque des revendications 1 à 7, caractérisé en ce que dans la zone initiale raccordée directement au chargement du liquide et assurant au moins deux plateaux théoriques, les vapeurs s'écoulent dans des canaux de ruissellement ayant un diamètre hydraulique de 120 à 150 mm ou son équivalent pour des canaux de ruissellement non tubulaires.

9. Procédé suivant l'une quelconque des revendications 1 à 8, caractérisé en ce que dans la zone de queue assurant au moins six plateaux théoriques, les vapeurs s'écoulent dans des canaux de ruissellement ayant un diamètre hydraulique inférieur à 120 mm, et, de préférence, inférieur à 80 mm ou son équivalent pour des canaux de ruissellement non tubulaires.

10. Procédé suivant la revendication 9, caractérisé en ce qu'il consiste à subdiviser la zone de queue en deux zones partielles, les vapeurs s'écoulant dans la première zone partielle de ladite zone de queue, qui est raccordée à la zone initiale, dans des canaux de ruissellement ayant un diamètree hydraulique de canal de ruissellement de 120 à 80 mm ou son équivalent pour un diamètre de canal de ruissellement non tubulaire, et les vapeurs s'écoulant dans la deuxième zone partielle qui y est directement raccordée, dans des canaux de ruissellement ayant un diamètre hydraulique de canal de ruissellement inférieur à 80 mm ou son équivalent pour un diamètre de canal de ruissellement non tubulaire.

11. Procédé suivant l'une quelconque des revendications 1 à 10, caractérisé en ce qu'il consiste à réaliser les diverses zones de distillation par entraînement à la vapeur, à film en chute libre et à contre-courant, dans des colonnes à film en chute libre adaptées, connues en elles-mêmes.

12. Procédé suivant l'une quelconque des revendications 1 à 11, caractérisé en ce qu'il consiste à maintenir la perte de charge sur l'ensemble des zones de distillation par entraînement à la vapeur, à film en chute libre et à contre-courant, à une valeur inférieure à 1,6 mbar et, de préférence, inférieure à 1,2 mbar.

13. Procédé suivant l'une quelconque des revendications 1 à 12, caractérisé en ce qu'il consiste à maintenir l'épaisseur de la couche du film de liquide entre 0,35 et 0,55 mm.

14. Procédé suivant l'une quelconque des revendications 1 à 13, caractérisé en ce qu'il consiste à maintenir, dans la zone initiale, la température des parois des canaux de ruissellement à une valeur supérieure de 10°K, au plus, et, de préférence, supérieure de 2 à 4°K à la température d'écoulement du liquide, et à la maintenir, dans la zone de queue, à une valeur sensiblement égale à la température d'écoulement du liquide.

15. Procédé suivant l'une quelconque des revendications 1 à 14, caractérisé en ce qu'il consiste à maintenir la durée totale de séjour de particules déterminées de liquide dans la zone initiale et dans la zone de queue à moins de 40 secondes.

16. Procédé suivant l'une quelconque des revendications 1 à 15, caractérisé en ce qu'il consiste à dégazer le liquide à traiter, dans un étage préalable, sous une pression de 60 à 280 mbar et à une température comprise entre 40 et 100 °C, et à l'introduire dans la zone initiale avec la teneur en eau de 0,05 à 0,2% en poids qui subsiste dans ces conditions.

17. Procédé suivant l'une quelconque des revendications 1 à 16, caractérisé en ce que, dans le cas de liquides ayant une proportion particulièrement importante d'acides gras libres et d'autres substances à bas point d'ébullition, il consiste à effectuer immédiatement avant leur admission dans la zone initiale, un traitement flash en opérant pratiquement sous la même pression que dans la zone initiale, et à séparer et à condenser les vapeurs qui se dégagent lors dudit traitement flash.

18. Procédé suivant l'une quelconque des revendications 1 à 17, caractérisé en ce qu'il consiste à introduire un ou plusieurs agents complexants dans le bas de la zone de queue ou dans le produit qui en est retiré et est partiellement refroidi.

19. Procédé suivant l'une quelconque des revendications 1 à 18, caractérisé en ce qu'il consiste à se servir, comme vapeur d'eau, de la vapeur noble, produite à partir de l'eau préalablement distillée et dégazée.

**Fig. 1**

Fig. 1a

Fig. 2

# Fig.3

# Fig. 4

# Fig.5

# Fig.6